# EUROPEAN PATENT SPECIFICATION

(11) **EP 2 719 611 B1**
(45) Date of publication and mention of the grant of the patent: **07.01.2015**
(21) Application number: 13160383.9
(22) Date of filing: 21.03.2013
(51) Int. Cl.: B62J 15/00

(54) **Motorcycle with front fender**
Motorrad mit Vorderradschützer
Motocyclette avec garde-boue avant

(30) Priority: 11.10.2012 JP 2012226283
(43) Date of publication of application: 16.04.2014
(73) Proprietor: Yamaha Hatsudoki Kabushiki Kaisha, Iwata-shi, Shizuoka 438-8501 (JP)
(72) Inventor: Terada, Hirohisa, Iwata-shi, Shizuoka 438-8501 (JP)
(74) Representative: Grünecker, Kinkeldey, Stockmair & Schwanhäusser

(56) References cited:
- EP-A1- 2 508 415
- EP-A2- 2 077 219
- JP-U- S5 994 984
- US-A1- 2008 156 559

## Description

The present invention relates to a motorcycle **according to the preamble of independent claim 1. Such a motorcycle can be taken from the prior art document** US 2008/0156559 A1**.**

A so-called underbone type motorcycle is disclosed in US 2008/0156559 A1. With this type of vehicle, a recessed portion that is recessed lower than a seat is provided between the seat and a handle in a front/rear direction to make it easy for a rider to get on and off the vehicle. An engine is supported by a main frame of a vehicle body frame below the recessed portion. A cylinder of the engine extends in the front/rear direction at an angle close to horizontal.

The motorcycle includes a front fender that protects the vehicle from water, mud, stone, or other scattering matter kicked up by a front wheel. As mentioned above, in the underbone type motorcycle, the cylinder of the engine is disposed at a lower position and if a cylinder head is to be protected by the front fender, the front fender must be extended to a lower position and the front fender thus becomes large. The front fender included in the motorcycle according to US 2008/0156559 A1 thus has a structure in which two fenders (a front side fender and a rear side fender) that are divided in the front/rear direction are mutually connected.

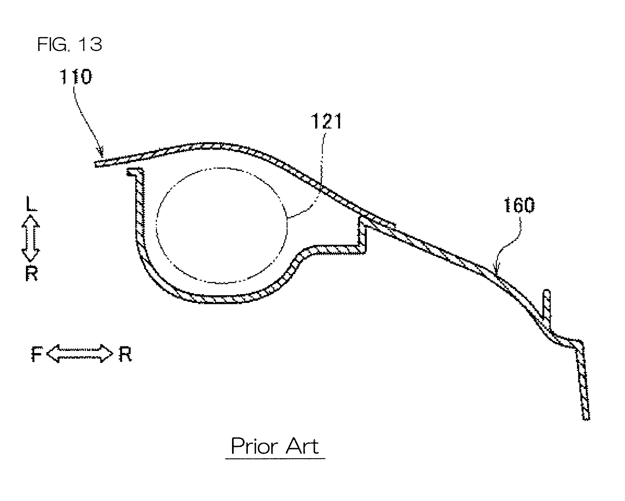

FIG. 13 is a sectional view of a structure in surroundings of a front fork 121 of the conventional motorcycle described in US 2008/0156559 A1. As shown in FIG. 13, the front side fender 110 protects the front fork 121 at an outer lateral side (upper side in FIG. 13) of the front fork 121. In order to protect the front fork 121 and to make the front side fender 110 as compact as possible, the front side fender 110 extends inward toward the front and rear of the front fork 121 from the outer lateral side of the front fork 121. The rear side fender 160 extends past an inner lateral side of the front fork 121 and to the front of the front fork 121 to protect a front portion of the front fork 121.

However as shown in FIG. 13, a front end portion of the rear side fender 160 is disposed in front of the front fork 121 and the rear side fender 160 thus cannot be removed from the vehicle by moving the rear side fender 160 rearward. Therefore to remove the rear side fender 160 from the vehicle, the rear side fender 160 must be moved downward. The front wheel is disposed below the rear side fender 160. The front wheel must thus be removed from the front fork 121 before removing the rear side fender 160 from the vehicle. The motorcycle according to US 2008/0156559 A1 is thus insufficient in maintainability.

For removing the rear side fender 160 from the vehicle without removing the front wheel from the front fork 121, one may consider providing the front side fender 110 with a portion (hereinafter referred to as the "front guard portion") corresponding to the front end portion of the rear side fender 160.

However as shown in FIG. 13, the front side fender 110 extends to behind the front fork 121 and thus when the front side fender 110 is provided with the front guard portion, the front side fender 110 becomes complicated in shape. Design and manufacture in consideration of a draft angle provided to facilitate extraction of a product from a mold and a recessed portion (so-called "sink") that forms in a surface of a product due to contraction of resin thus become more complicated. These lead to increase of cost and lowering of productivity. In addition, the front fender receives scattering matter, such as mud, water, stone, etc., and thus vibrates in the front/rear direction and an up/down direction. Vibrations of the front fender in the front/rear direction and up/down direction must thus also be taken into consideration.

It is an object of the present invention to provide a motorcycle having high reliability an can be easily assembled. According to the present invention said object is solved by a motorcycle having the features of independent claim 1. Preferred embodiments are laid down in the dependent claims. Accordingly it is provided a motorcycle including a vehicle body frame, a seat supported by the vehicle body frame, a handle disposed further to the front than the seat, a vehicle body cover forming, between the seat and the handle in the front/rear direction, a recessed portion recessed lower than the seat, an engine supported by the vehicle body frame and at least partially disposed below the recessed portion and the vehicle body frame, a front fork rotatably supported by the vehicle body frame and rotating together with the handle, a front wheel rotatably supported by the front fork and disposed in front of the engine, and a front fender mounted on the front fork so as to be positioned above and behind the front wheel, extending outward from the front of the front fork toward an outer lateral side of the front fork, and extending inward from the outer lateral side of the front fork toward the rear of the front fork. The front fender includes a first fender, at least partially disposed above the front wheel, and a second fender, which is a separate body from the first fender that is connected to the first fender and is at least partially disposed behind the front wheel. The first fender includes an upper side guard portion extending outward from the front of the front fork to the outer lateral side of the front fork and a front guard portion positioned further inward than the upper side guard portion and disposed in front of the front fork. The second fender includes a lower side guard portion extending from behind the front fork, past the outer lateral side of the front fork, and to further to the front than the front fork and being connected to the upper side guard portion so as to be positioned below the upper side guard portion. A boundary line between a lower end edge of the upper side guard portion and an upper end edge of the lower side guard portion in a side view includes an inclined portion inclined with respect to the front fork. The inclined portion extends from the front of the front fork to behind the front fork.

With this arrangement, the front fender extends outward from the front of the front fork toward the outer lateral side of the front fork and further extends inward from the outer lateral side of the front fork toward the rear of the front fork. The front fender includes the first fender, at least partially disposed above the front wheel, and the second fender, at least partially disposed behind the front wheel. The first fender and the second fender are separate members that are mutually connected. The upper side guard portion of the first fender and the lower side guard portion of the second fender are mutually connected so that the upper side guard portion is positioned above the lower side guard portion.

The boundary line between the lower end edge of the upper side guard portion and the upper end edge of the lower side guard portion in a side view includes the inclined portion inclined with respect to the front fork. The inclined portion spans across the front fork in the front/rear direction in a side view. As shall be described below, vibrations of the first fender and the second fender in the front/rear direction and an up/down direction can be reduced because the inclined portion is provided at the boundary line. Further, the first fender is suppressed from becoming complicated and yet the front guard portion, which is provided on the second fender in the conventional front fender, can be provided on the first fender because the boundary line has the shape described above. The first fender and the second fender can thus be improved in ease of assembly and in maintainability.

In a preferred embodiment, the first fender may further include a first fender portion extending forward from the upper side guard portion and disposed above the front wheel. A front end of the boundary line may be disposed lower than a base portion of the first fender portion.

With this arrangement, the first fender portion extends forward from the upper side guard portion and thus swings readily in the up/down direction with its base portion as a center. The front end of the boundary line is disposed lower than the base portion of the first fender portion. Therefore, an up/down direction force applied to the base portion of the first fender portion is not readily applied to the boundary line. Separation in the up/down direction (so-called splaying) of a lower end edge of the upper side guard portion and an upper end edge of the lower side guard portion can thus be suppressed.

In a preferred embodiment, a rear end of the boundary line may be disposed higher than a front end of the boundary line.

With this arrangement, the inclined portion that extends obliquely upward toward the rear can be formed readily because the rear end of the boundary line is positioned higher than the front end of the boundary line. Further, a rear end portion of the upper side guard portion can be made shorter in the up/down direction than in a case where the rear end of the boundary line is positioned at the same height as the front end of the boundary line or is positioned lower than the front end of the boundary line. Enlargement of the first fender can thereby be suppressed.

In a preferred embodiment, the front fender may be mounted on the front fork by a bolt. In this case, the inclined portion of the boundary line may be inclined with respect to a center line of the bolt in a side view.

With this arrangement, the front fender is mounted on the front fork by the bolt and thus swings readily with a vicinity of the bolt as a center. The inclined portion of the boundary line is inclined with respect to the center line of the bolt and is inclined with respect to a swinging direction of the front fender. The inclined portion can thus suppress a lower end edge of the upper side guard portion and an upper end edge of the lower side guard portion from separating mutually even when the front fender swings with the vicinity of the bolt as the center. Vibrations of the front fender can thereby be reduced.

In a preferred embodiment, the second fender may further include an inner guard portion disposed at an inner lateral side of the front fork.

With this arrangement, the inner guard portion is disposed at the inner lateral side of the front fork and the front fender can thus protect the front fork not only from the outer lateral side and the front of the front fork but also from the inner lateral side of the front fork. The front fork can thereby be protected reliably.

In a preferred embodiment, the inner guard portion may extend past an inner lateral side of the front guard portion and to the front of the front guard portion.

With this arrangement, the inner guard portion extends past the inner lateral side of the front guard portion and to the front of the front guard portion and therefore at least a portion of the inner guard portion is disposed in front of the front guard portion. An inner end portion of the front guard portion is thus covered from the front by the inner guard portion. Scattering matter, such as water, mud, or stone, etc., is thus unlikely to pass between the inner end portion of the front guard portion and the inner guard portion and move to surroundings of the front fork. The front fork can thus be protected more reliably.

In a preferred embodiment, the front guard portion may extend inward from an inner surface of the first fender portion.

With this arrangement, a gap between an outer end portion of the front guard portion and the inner surface of the first fender is eliminated and scattering matter, such as water, mud, or stone, etc., can thus be prevented from passing between the outer end portion of the front guard portion and the inner surface of the first fender and moving to the surroundings of the front fork. The front fork can thereby be protected more reliably.

In a preferred embodiment, the front fork may include an outer tube and an inner tube extending in an axial direction of the outer tube from an end portion of the outer tube. In this case, the front guard portion may be disposed in front of the outer tube and the inner tube and may extend from above the end portion of the outer tube to below the end portion of the outer tube.

With this arrangement, the end portion of the outer tube is covered reliably by the front guard portion and therefore scattering matter, such as water, mud, or stone, etc., can be suppressed from hitting the outer tube and the inner tube at a vicinity of the end portion of the outer tube. The front fork can thereby be protected more reliably.

In a preferred embodiment, the front fender may include an inserted portion, which is provided at one of either the lower end edge of the upper side guard portion or the upper end edge of the lower side guard portion, and an insertion hole, which is provided at the other of either the lower end edge of the upper side guard portion or the upper end edge of the lower side guard portion and in which the inserted portion is inserted.

With this arrangement, the inserted portion and the insertion hole are provided at the upper side guard portion and the lower side guard portion. The inserted portion is inserted into the insertion hole and movements of the inserted portion are thus restricted by an inner surface of the insertion hole. Relative movements of the lower end edge of the upper side guard portion and the upper end edge of the lower side guard portion are thereby restricted by the inserted portion and the insertion hole. Vibrations of the first fender and the second fender can thus be reduced further.

Further, the lower end edge of the upper side guard portion and the upper end edge of the lower side guard portion can be connected by a simple process of inserting the inserted portion into the insertion hole and assembly and disassembly of the first fender and the second fender are thus easy. Ease of assembly and maintainability of the first fender and the second fender can thus be improved further.

In a preferred embodiment, the inserted portion may extend in the up/down direction and be inserted into the insertion hole in the up/down direction.

With this arrangement, the inner surface of the inserted hole is disposed in front, behind, and to the right and left of the inserted portion and movements of the inserted portion in the front/rear direction and right/left direction are restricted by the inner surface of the inserted hole. Vibrations of the first fender and the second fender in the front/rear direction and the right/left direction can thus be reduced.

In a preferred embodiment, the first fender may be a coated part on which a coating is applied and the second fender may be a non-coated part having an exposed surface of base material. Accordingly, a coating is not applied.

With this arrangement, an area to be coated is reduced and the motorcycle can thus be reduced in cost. Further, at least a portion of the second fender, which is the non-coated part, is disposed below the first fender, which is a coated part, and therefore water, mud, stone, or other scattering matter kicked up by the front wheel is received by the second fender that is the non-coated part. A coated surface of the first fender is thereby protected by the second fender. Flawing and peeling of coating due to collision by scattering matter can thus be suppressed.

Other elements, features, steps, characteristics and advantages of the present teaching will become more apparent from the following detailed description of the preferred embodiments with reference to the attached drawings.

### BRIEF DESCRIPTION OF THE DRAWINGS

FIG. 1 is a schematic left side view of a motorcycle according to a preferred embodiment.
FIG. 2 is a front view of the motorcycle according to the preferred embodiment.
FIG. 3 is a perspective view of a front wheel, a front fork, and a front fender.
FIG. 4 is a perspective view of the front wheel, the front fork, and the front fender.
FIG. 5 is a plan view of a structure in surroundings of an under bracket.
FIG. 6 is a plan view of a structure in the surroundings of the under bracket.
FIG. 7 is a side view of the front wheel, the front fork, and the front fender.
FIG. 8 is a sectional view of the front fender taken along line VIII-VIII of FIG. 7.
FIG. 9 is a sectional view of the front fender taken along line IX-IX of FIG. 7.
FIG. 10A is a plan view of a first fender.
FIG. 10B is a left side view of the first fender.
FIG. 10C is a rear view of the first fender.
FIG. 11A is a plan view of a second fender.
FIG. 11B is a left side view of the second fender.
FIG. 12A is a schematic left side view of a front fender according to a first comparative example.
FIG. 12B is a schematic left side view of a front fender according to a second comparative example.
FIG. 13 is a sectional view of a front fender according to a conventional art.

### DETAILED DESCRIPTION OF THE PREFERRED EMBODIMENTS

Respective directions of front/rear, up/down, and right/left in the following description are based on a viewpoint of a driver when a motorcycle 1 is in a reference attitude corresponding to a state where it is travelling straight on a horizontal plane and the driver is facing forward. The right/left direction corresponds to a vehicle width direction.

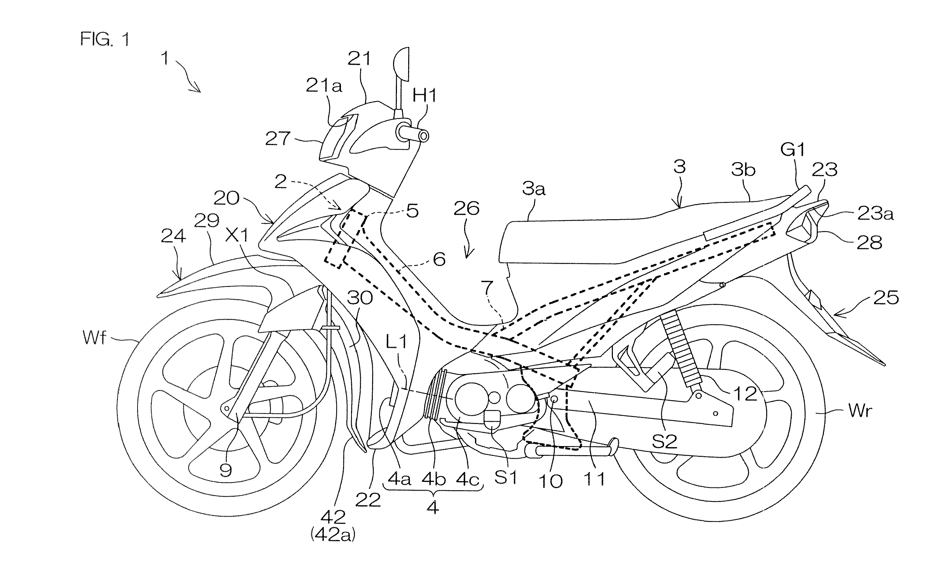

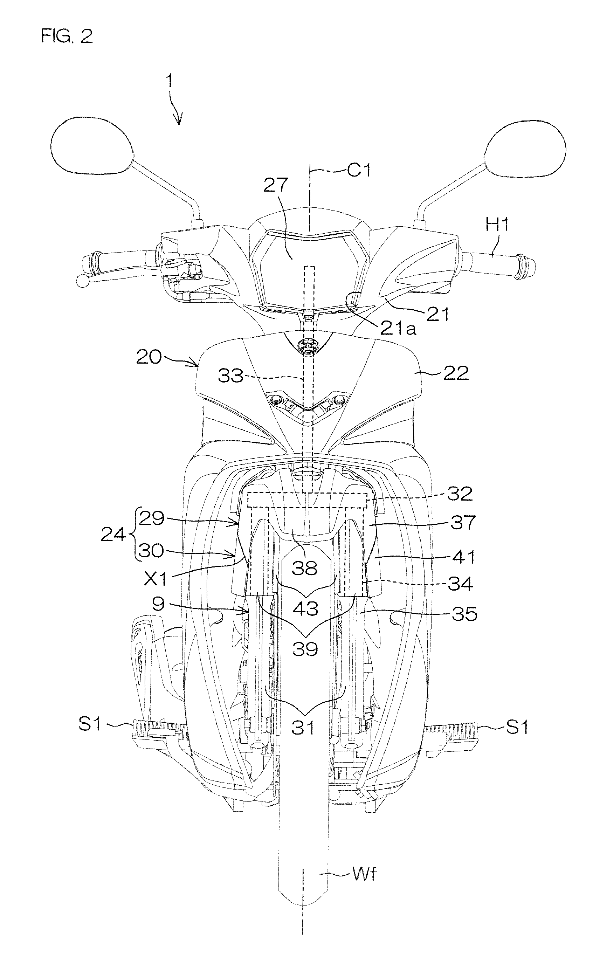

FIG. 1 is a schematic left side view of the motorcycle 1 according to a preferred embodiment, and FIG. 2 is a front view thereof. An example where the motorcycle 1 is an underbone type, saddle type vehicle shall be described below.

As shown in FIG. 1, the motorcycle 1 includes a front wheel Wf, a rear wheel Wr, a vehicle body frame 2 supporting the front wheel Wf and the rear wheel Wr, and a saddle type seat 3 disposed above the vehicle body frame 2. In FIG. 1, the vehicle body frame 2 is indicated by thick broken lines. The motorcycle 1 further includes an engine 4 (internal combustion engine) generating a motive power that makes the motorcycle 1 travel and a drive mechanism transmitting the motive power of the engine 4 to the rear wheel Wr.

As shown in FIG. 1, the vehicle body frame 2 includes a head pipe 5 extending obliquely upward to the rear, a main frame 6 extending obliquely downward to the rear from the head pipe 5, and a pair of right and left seat frames 7 extending obliquely upward to the rear from the main frame 6. The vehicle body frame 2 further includes a cross member coupling the pair of seat frames 7. The pair of seat frames 7 extend in the front/rear direction and are spaced apart from each other by an interval in the vehicle width direction. The cross member extends from one of the seat frames 7 to the other seat frame 7.

As shown in FIG. 1, the seat 3 is disposed above the pair of seat frames 7. The seat 3 is supported by the pair of seat frames 7. The seat 3 extends in the front/rear direction. The seat 3 may be for seating one person or for seating two persons. FIG. 1 shows an example where a two-person seat, including a driver seat 3a on which a driver sits and a tandem seat 3b on which a passenger sits, is used as the seat 3. The motorcycle 1 includes steps S1 on which the feet of the driver are set, steps S2 on which the feet of the passenger are set, and a grip G1 gripped by the passenger. The grip G1 is a U-shaped bar in a plan view and is disposed along an edge portion of a rear portion of the seat 3. The grip G1 is fixed to the seat frames 7.

As shown in FIG. 1, the motorcycle 1 includes a handle H1 operated by the driver and a front fork 9 rotating around a central axis of a steering shaft together with the handle H1 and the front wheel Wf.

As shown in FIG. 1, the front fork 9 rotatably supports the front wheel Wf. The front fork 9 is supported by the head pipe 5. The front wheel Wf is thus supported by the vehicle body frame 2 via the front fork 9. The steering shaft 33 (see FIG. 2) of the front fork 9 is inserted inside the head pipe 5 of the vehicle body frame 2. The steering shaft 33 is rotatable around a steering axis (central axis of the steering shaft 33) with respect to the head pipe 5. The handle H1 is mounted on the front fork 9 at a position higher than the head pipe 5. The handle H1 is disposed further to the front than the seat 3 at a height higher than the seat 3. When the handle H1 is operated, the front wheel Wf and the front fork 9 rotate to the right or left together with the handle H1. The motorcycle 1 is thereby steered.

As shown in FIG. 1, the motorcycle 1 includes a pivot shaft 10 extending in the vehicle width direction behind the engine 4, a swing arm 11 swinging in the up/down direction around a central axis of the pivot shaft 10 together with the rear wheel Wr, and a rear suspension 12 supporting the rear wheel Wr and the swing arm 11.

As shown in FIG. 1, the pivot shaft 10 is positioned behind the engine 4 in a side view. The pivot shaft 10 is mounted on the vehicle body frame 2. The swing arm 11 extends rearward from the pivot shaft 10. The swing arm 11 is mounted on the vehicle body frame 2 via the pivot shaft 10. The rear wheel Wr is rotatably supported by a rear end portion of the swing arm 11. The rear wheel Wr is supported by the vehicle body frame 2 via the pivot shaft 10 and the swing arm 11. The rear wheel Wr is disposed below the seat 3 and behind the engine 4. The rear wheel Wr is disposed below the pair of seat frames 7 in a side view.

As shown in FIG. 1, the motorcycle 1 includes a vehicle body cover 20 that covers the vehicle body frame 2, etc. The vehicle body cover 20 includes a handle cover 21 covering the handle H1, a leg shield 22 disposed in front of the legs of the driver seated on the seat 3, and a rear cover 23 covering side surfaces of the pair of seat frames 7. The vehicle body cover 20 further includes a front fender 24 covering the front wheel Wf and a rear fender 25 covering the rear wheel Wr.

As shown in FIG. 1, the handle cover 21 is mounted on the handle H1. The leg shield 22 is disposed below the handle cover 21 in a side view. The rear cover 23 is disposed at outer lateral sides of the pair of seat frames 7. A lower portion of the leg shield 22 has, for example, a bifurcated shape that is recessed upwardly in a front view and a portion (a cylinder body 4b) of the engine 4 is disposed between lower portions of the leg shield 22. The rear cover 23 is disposed further to the rear than the engine 4. The rear cover 23 extends from below the seat 3 to behind the seat 3 in a side view. The rear cover 23 is disposed at outer lateral sides of and above the respective seat frames 7. The rear wheel Wr is disposed below the rear cover 23 in a side view and the rear fender 25 extends obliquely downward toward the rear from the rear cover 23 in a side view. A rear end portion of the rear fender 25 is disposed further to the rear than the rear cover 23.

As shown in FIG. 1, the front fender 24 is disposed above and behind the front wheel Wf and the rear fender 25 is disposed above and behind the rear wheel Wr. The front fender 24 projects downward from the leg shield 22 in a side view. The front fender 24 is mounted on the front fork 9. The front fender 24 rotates to the right and left around the steering axis together with the front fork 9. The rear fender 25 is mounted on the pair of seat frames 7. Portions of the rear cover 23 are disposed at outer lateral sides of the rear fender 25 and overlap with the rear fender 25 in a side view. The rear fender 25 is disposed lower than the seat 3.

As shown in FIG. 1, the vehicle body cover 20 forms a recessed portion 26, recessed lower than the seat 3, between the seat 3 and the handle H1 in the front/rear direction. A bottom of the recessed portion 26 is disposed above the engine 4 and the main frame 6. A portion of the engine 4 is thus disposed below the recessed portion 26 and the vehicle body frame 2. The engine 4 includes a cylinder head 4a, the cylinder body 4b, and a crankcase 4c that are at least partially disposed below the recessed portion 26 and the vehicle body frame 2. A center line L1 of the cylinder extends in the front/rear direction in a plan view and is inclined at an angle of no more than 45 degrees with respect to the horizontal plane. The engine 4 is disposed lower than the seat 3. The front wheel Wf is disposed in front of the engine. The engine 4 is supported by the vehicle body frame 2. The engine 4 is disposed between the front wheel Wf and the rear wheel Wr in the front/rear direction.

As shown in FIG. 1, the motorcycle 1 includes a headlight 27 mounted on a front portion of the motorcycle 1 and the taillight 28 mounted on a rear portion of the motorcycle 1.

As shown in FIG. 1, the headlight 27 is disposed in front of the handle H1. The headlight 27 is thus disposed higher than the seat 3. The handle cover 21 houses a portion of the headlight 27. As shown in FIG. 2, the headlight 27 is exposed from an opening portion 21 a of the handle cover 21 that is open to the front. On the other hand, as shown in FIG. 1, the taillight 28 is disposed behind the seat 3. The taillight 28 is disposed above the rear fender 25. The taillight 28 is thus disposed above the rear wheel Wr. The rear cover 23 houses a portion of the taillight 28. The taillight 28 is exposed from an opening portion 23a of the rear cover 23 that is open to the rear.

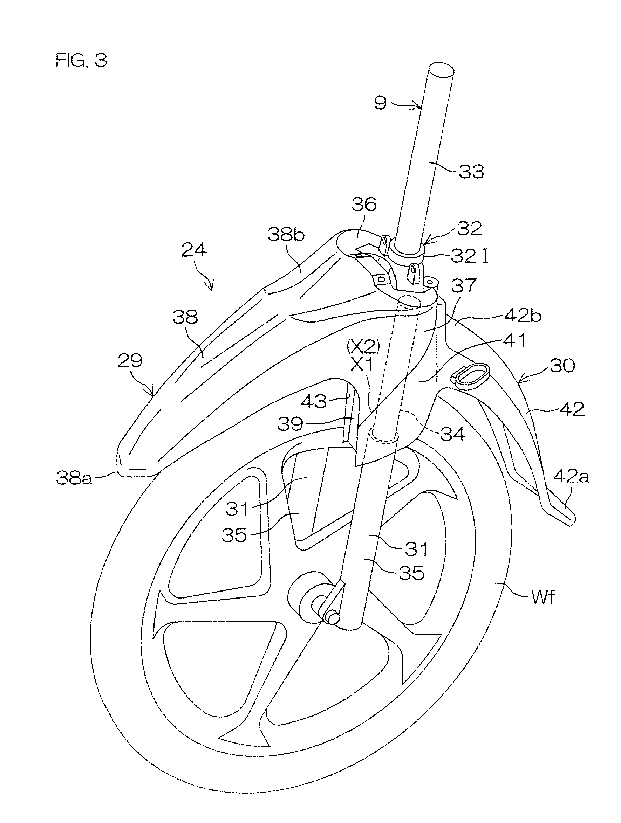

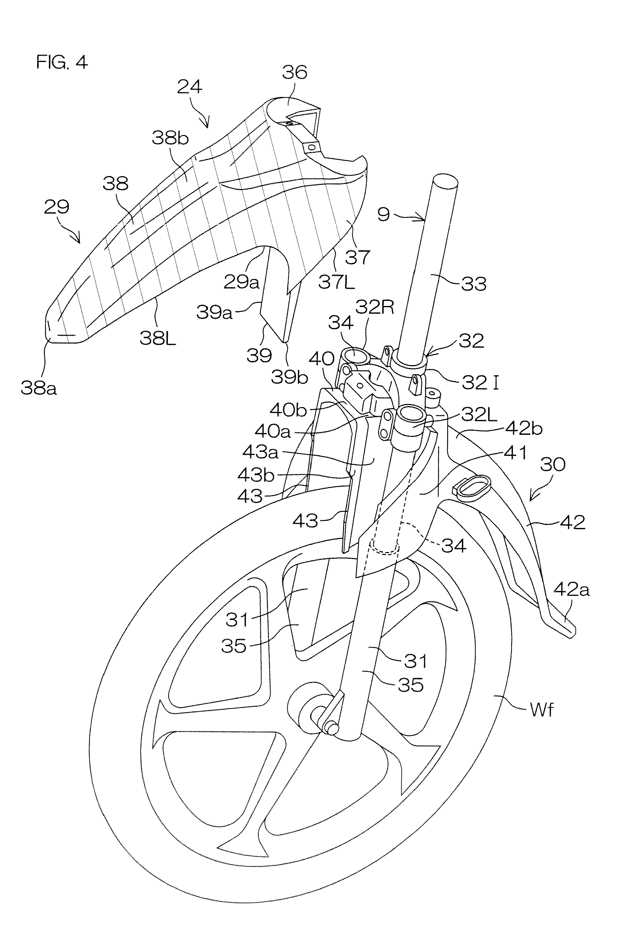

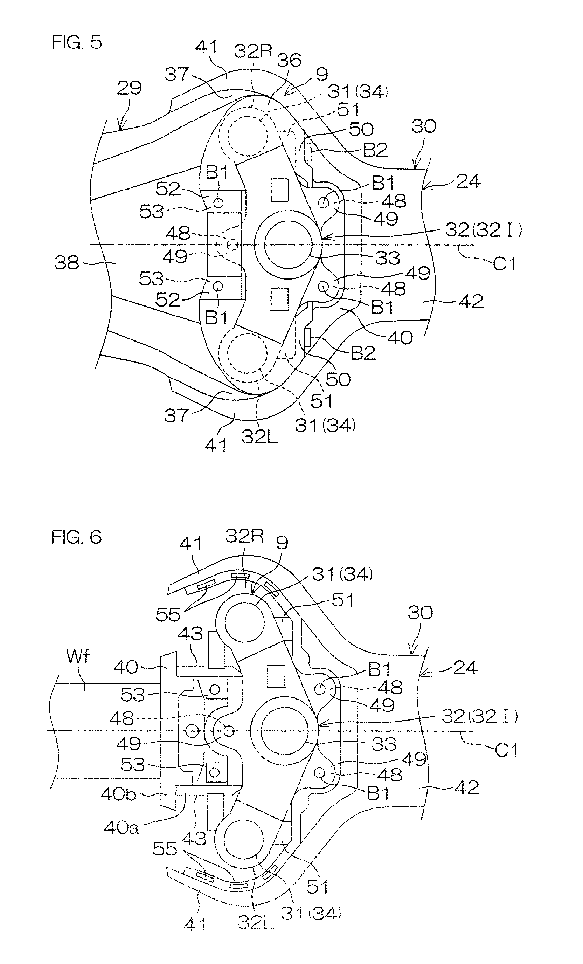

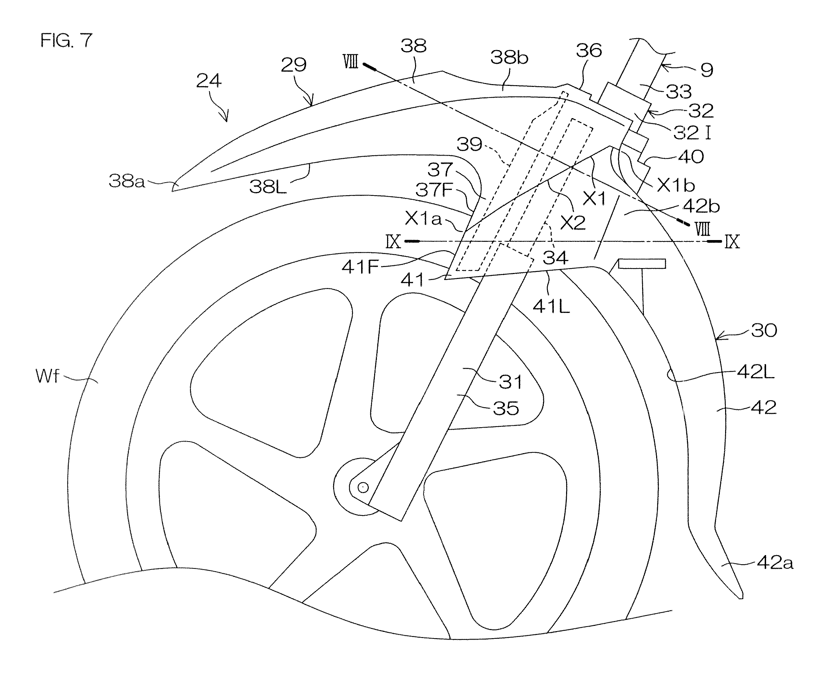

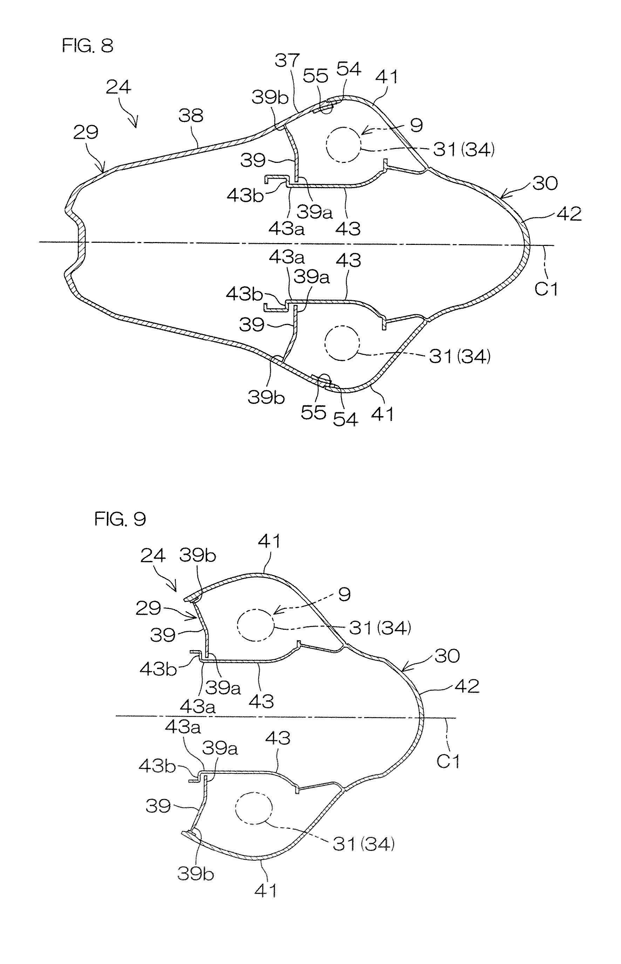

FIG. 3 and FIG. 4 are perspective views of the front wheel Wf, the front fork 9, and the front fender 24. FIG. 5 and FIG. 6 are plan views of a structure in surroundings of an under bracket 32. FIG. 7 is a side view of the front wheel Wf, the front fork 9, and the front fender 24. FIG. 8 is a sectional view of the front fender 24 taken along line VIII-VIII of FIG. 7. FIG. 9 is a sectional view of the front fender 24 taken along line IX-IX of FIG. 7. FIG. 8 shows a cross section resulting from sectioning the front fender 24 along a plane orthogonal to the front fork 9, and FIG. 9 shows a cross section resulting from sectioning the front fender 24 along a horizontal plane.

As shown in FIG. 3 and FIG. 4, the front fender 24 includes a first fender 29 and a second fender 30 that are made of resin and are detachably mounted on the front fork 9.

As shown in FIG. 3 and FIG. 4, the first fender 29 and the second fender 30 are separate members that are mutually connected. At least a portion of the first fender 29 is disposed above the front wheel Wf and at least a portion of the second fender 30 is disposed behind the front wheel Wf. The first fender 29 is a coated part on which a coating is applied and the second fender 30 is a non-coated part on which a coating is not applied. An outer surface of the first fender 29 thus includes a coated surface (hatched surface in FIG. 4) on which the coating is applied.

As shown in FIG. 3, the front fender 24 includes a first fender portion 38 disposed above the front wheel Wf and a second fender portion 42 disposed behind the front wheel Wf. Further, the front fender 24 includes side guard portions disposed at outer lateral sides of the front fork 9, front guard portions 39 disposed in front of the front fork 9, and inner guard portions 43 disposed at inner lateral sides of the front fork 9. The side guard portions include upper side guard portions 37 and lower side guard portions 41. The front wheel Wf and the front fork 9 are protected by the front fender 24.

As shown in FIG. 4, the front fork 9 includes two telescopic shafts 31 disposed at the right and left of the front wheel Wf, the under bracket 32 mounted on the telescopic shafts 31 at positions higher than the front wheel Wf, and a steering shaft 33 extending upward from the under bracket 32.

As shown in FIG. 5, the two telescopic shafts 31 are disposed at the right and left of a vehicle center C1. The vehicle center C1 is defined by a vertical plane containing a bisector that bisects the vehicle body frame 2 in the vehicle width direction. The two telescopic shafts 31 are disposed in parallel across an interval in the vehicle width direction. A central portion of the front wheel Wf is disposed between lower end portions of the two telescopic shafts 31. As shown in FIG. 7, the telescopic shafts 31 extend obliquely rearward and upward from the central portion of the front wheel Wf in a side view. The telescopic shafts 31 are inclined in the front/rear direction in a side view. Upper end portions of the telescopic shafts 31 are disposed higher than the front wheel Wf.

As shown in FIG. 7, each telescopic shaft 31 includes an impact absorbing mechanism that is contractible in an axial direction. That is, each telescopic shaft 31 includes an inner tube 34 and an outer tube 35 that extend in the axial direction of the telescopic shaft 31. The inner tube 34 and the outer tube 35 are movable relatively in the axial direction of the telescopic shaft 31. A portion of the inner tube 34 is inserted inside the outer tube 35. The inner tube 34 is an upper tube, and extends upward in the axial direction from an upper end portion of the outer tube 35 which is a lower tube. The inner tube 34 may extend downward in the axial direction from a lower end portion of the outer tube 35 instead. That is, the inner tube 34 may be the lower tube and the outer tube 35 may be the upper tube.

As shown in FIG. 4, the under bracket 32 is mounted on the upper end portions of the two telescopic shafts 31. The under bracket 32 is disposed higher than the front wheel Wf. The under bracket 32 includes a right coupling portion 32R and a left coupling portion 32L respectively coupled to the upper end portions of the pair of telescopic shafts 31 and an intermediate coupling portion 321 coupled to a lower end portion of the steering shaft 33. The pair of telescopic shaft 31 extend downward from the right coupling portion 32R and the left coupling portion 32L, respectively, and the steering shaft 33 extends upward from the intermediate coupling portion 321. As shown in FIG. 5 and FIG. 6, the intermediate coupling portion 321 is disposed between the right coupling portion 32R and the left coupling portion 32L in the right/left direction. At least a portion of the intermediate coupling portion 321 is disposed further to the rear than the right coupling portion 32R and the left coupling portion 32L.

The steering shaft 33 extends obliquely rearward and upward from the under bracket 32. As shown in FIG. 7, the steering shaft 33 is inclined in the front/rear direction in a side view. An inclination angle of the steering shaft 33 with respect to the horizontal plane is equal to the inclination angle of each telescopic shaft 31 with respect to the horizontal plane. At least a portion of the steering shaft 33 is disposed further to the rear than the two telescopic shafts 31. The steering shaft 33 is disposed between the two telescopic shafts 31 in the vehicle width direction. The steering shaft 33 is disposed higher than the front fender 24.

As shown in FIG. 8 and FIG. 9, each of the telescopic shafts 31 of the front fork 9 is surrounded by the front fender 24. The front fender 24 extends outward toward outer lateral sides of the respective telescopic shafts 31 (in directions of separating from the vehicle center C1) from the front of the respective telescopic shafts 31. Further, from the outer lateral sides of the respective telescopic shafts 31, the front fender 24 extends inward (in directions of approaching the vehicle center C1) toward the rear of the respective telescopic shafts 31. The front fender 24 thus extends outward toward outer lateral sides of the front fork 9 from the front of the front fork 9 and extends inward from the outer lateral sides of the front fork 9 toward the rear of the front fork 9. The front fork 9 is thereby protected reliably.

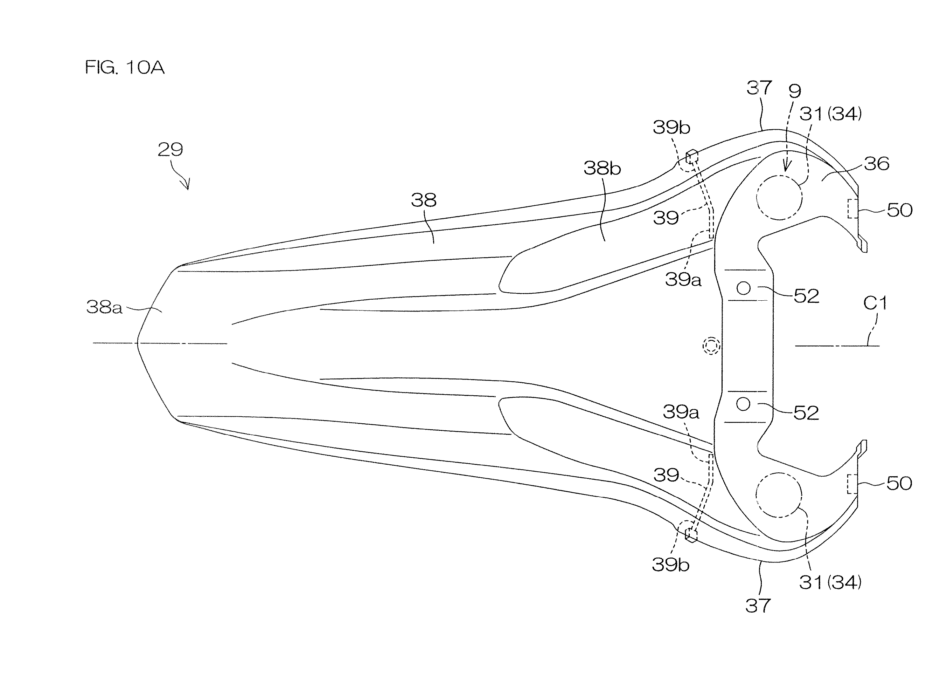

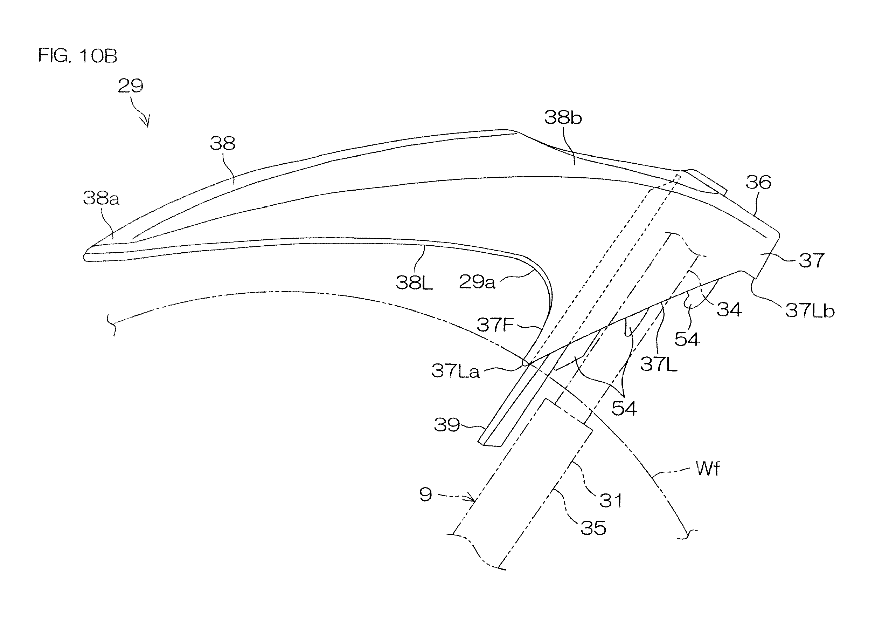

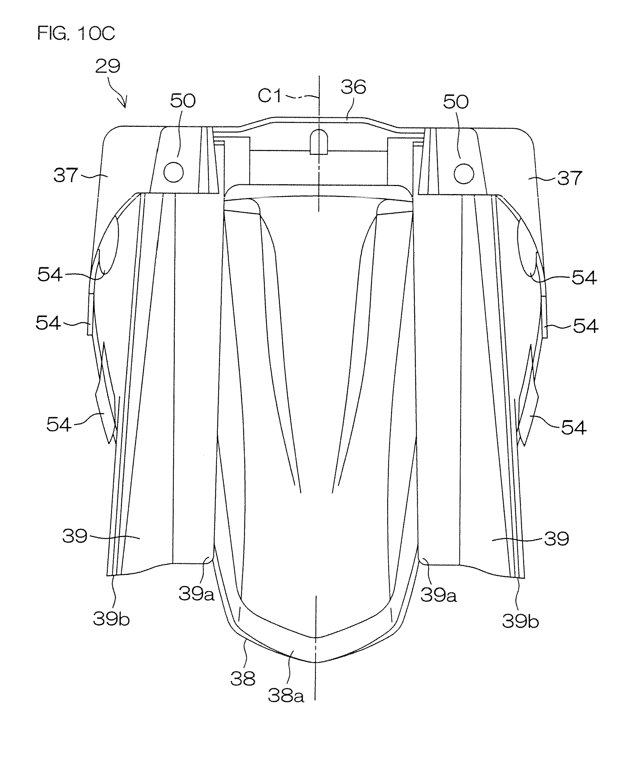

FIG. 10A is a plan view of the first fender 29. FIG. 10B is a left side view of the first fender 29. FIG. 10C is a rear view of the first fender 29.

As shown in FIG. 10A, the first fender 29 has a first upper wall portion 36 having a rearwardly open U-like shape in a plan view, the pair of upper side guard portions 37 disposed at the outer lateral sides of the front fork 9, and the first fender portion 38 extending obliquely downward toward the front from the first upper wall portion 36 and the upper side guard portions 37. As shown in FIG. 10B and FIG. 10C, the first fender 29 further includes the pair of front guard portions 39 disposed at inner lateral sides of the upper side guard portions 37.

As shown in FIG. 5, the first upper wall portion 36 surrounds the intermediate coupling portion 321 of the under bracket 32 in a plan view. An intermediate portion of the first upper wall portion 36 in the right/left direction is disposed in front of the intermediate coupling portion 321 in a plan view. In a plan view, the intermediate coupling portion 321 is disposed between a right end portion and a left end portion of the first upper wall portion 36 in the right/left direction. The right end portion and the left end portion of the first upper wall portion 36 are respectively disposed above the right coupling portion 32R and the left coupling portion 32L of the under bracket 32. The first upper wall portion 36 is thus disposed above the under bracket 32. The pair of telescopic shafts 31 extend downward from the right coupling portion 32R and the left coupling portion 32L, respectively. The upper end portions of the telescopic shafts 31 are thus covered from above by the first upper wall portion 36.

As shown in FIG. 5, the pair of upper side guard portions 37 are disposed at the right and left of the vehicle center C1. The pair of upper side guard portions 37 are disposed at the right and left of the two telescopic shafts 31. Each upper side guard portion 37 is thus disposed at the right or the left of the front fork 9. The upper side guard portion 37 at the right extends downward from the right end portion of the first upper wall portion 36, and the upper side guard portion 37 at the left extends downward from the left end portion of the first upper wall portion 36. Each upper side guard portion 37 has an arcuate shape that bulges outward in a plan view. Each upper side guard portion 37 extends outward from the front of the corresponding telescopic shaft 31 to the outer lateral side of the telescopic shaft 31. The upper side guard portions 37 thus extend outward from the front of the front fork 9 to the outer lateral sides of the front fork 9.

As shown in FIG. 10B, a lower end edge 37L of the upper side guard portion 37 extends obliquely upward toward the rear from the front of the telescopic shaft 31 in a side view. The lower end edge 37L of the upper side guard portion 37 is thus inclined in the up/down direction with respect to the telescopic shaft 31. The lower end edge 37L of the upper side guard portion 37 is thus inclined in the up/down direction with respect to the front fork 9. A front end 37La of the lower end edge 37L of the upper side guard portion 37, which is a lower end, overlaps with the front wheel Wf in a side view. A rear end 37Lb of the lower end edge 37L of the upper side guard portion 37, which is an upper end, is disposed above the front wheel Wf in a side view.

As shown in FIG. 10A, the first fender portion 38 is disposed further to the front than the first upper wall portion 36 and the upper side guard portions 37. The first fender portion 38 overlaps with the vehicle center C1. The first fender portion 38 is disposed above the front wheel Wf. The first fender portion 38 is longer than the first upper wall portion 36 and the upper side guard portions 37 in the front/rear direction. A width (length in the right/left direction) of a tip portion 38a of the first fender portion 38, which is a front end portion, is narrower than a width of a base portion 38b of the first fender portion 38, which is a rear end portion. Further, the width of the base portion 38b of the first fender portion 38 is narrower than the width of the upper side guard portions 37. A width of the first fender portion 38 is thus narrower than the width of the upper side guard portions 37.

As shown in FIG. 10B, the tip portion 38a of the first fender portion 38 is disposed lower than the base portion 38b of the first fender portion 38. The base portion 38b of the first fender portion 38 is disposed in front of the upper side guard portions 37 in a side view. The base portion 38b of the first fender portion 38 is disposed higher than the front ends 37La of the lower end edges 37L of the upper side guard portions 37. A thickness (length in the up/down direction) of the tip portion 38a of the first fender portion 38 in a side view is thinner than a thickness of the base portion 38b of the first fender portion 38 in a side view. A lower end edge 38L of the first fender portion 38 and a front end edge 37F of each upper side guard portion 37 form an arcuate recessed portion 29a that is recessed higher than the front end 37La of the lower end edge 37L of the upper side guard portion 37 in a side view at a portion of joining of the first fender portion 38 and the upper side guard portion 37. A stress occurring at the portion of joining of the first fender portion 38 and the upper side guard portion 37 is thereby reduced.

As shown in FIG. 10A, the front guard portions 39 are disposed below the upper side guard portions 37 and the first fender portion 38. The pair of front guard portions 39 are disposed at the right and left of the vehicle center C1. The front guard portion 39 at the right extends inward from an inner surface of the upper side guard portion 37 at the right, and the front guard portion 39 at the left extends inward from an inner surface of the upper side guard portion 37 at the left. The front guard portions 39 thus extend inward from inner surfaces of the first fender 29.

As shown in FIG. 10A, outer end portions 39b of the front guard portions 39 are disposed further outward than the first fender portion 38 in a plan view. The front guard portions 39 are disposed further to the rear than the tip portion 38a of the first fender portion 38. The front guard portions 39 are disposed further to the front than rear end portions of the upper side guard portions 37. The front guard portions 39 are thus disposed between the front end of the first fender 29 and the rear end of the first fender 29 in the front/rear direction.

As shown in FIG. 10B, each front guard portion 39 is a plate-like portion that is held in an attitude of extending in the up/down direction and the right/left direction. Each front guard portion 39 projects lower than the lower end edge 37L of the upper side guard portion 37. The lower end portion of the front guard portion 39 is thus disposed lower than the lower end edge 37L of the upper side guard portion 37. The lower end portion of the front guard portion 39 is disposed lower than the tip portion 38a of the first fender portion 38.

As shown in FIG. 8 and FIG. 9, the outer end portions 39b of the front guard portions 39 are disposed further outward than the telescopic shafts 31. Inner end portions 39a of the front guard portions 39 are disposed further inward than the telescopic shafts 31. The front guard portion 39 at the right is disposed in front of the telescopic shaft 31 at the right and the front guard portion 39 at the left is disposed in front of the telescopic shaft 31 at the left. The front guard portions 39 are thus disposed in front of the front fork 9.

As shown in FIG. 8 and FIG. 9, each front guard portion 39 has, for example, a frontwardly open V-like cross section. The cross section of the front guard portion 39 is not restricted to a V-like shape and may be curved or be rectilinear instead. The cross section of the front guard portion 39 may include a curved portion and a rectilinear portion.

As shown in FIG. 7, an upper end portion of each front guard portion 39 is disposed in front of the under bracket 32. The front guard portion 39 extends downward in the axial direction of the telescopic shaft 31 from the front of the under bracket 32. The front guard portion 39 extends from above an upper end portion of the outer tube 35 to below the upper end portion of the outer tube 35. An exposed portion of the inner tube 34 disposed outside the outer tube 35 is thus disposed behind the front guard portion 39. The exposed portion of the inner tube 34 is thereby covered from the front and protected against scattering matter by the front guard portion 39.

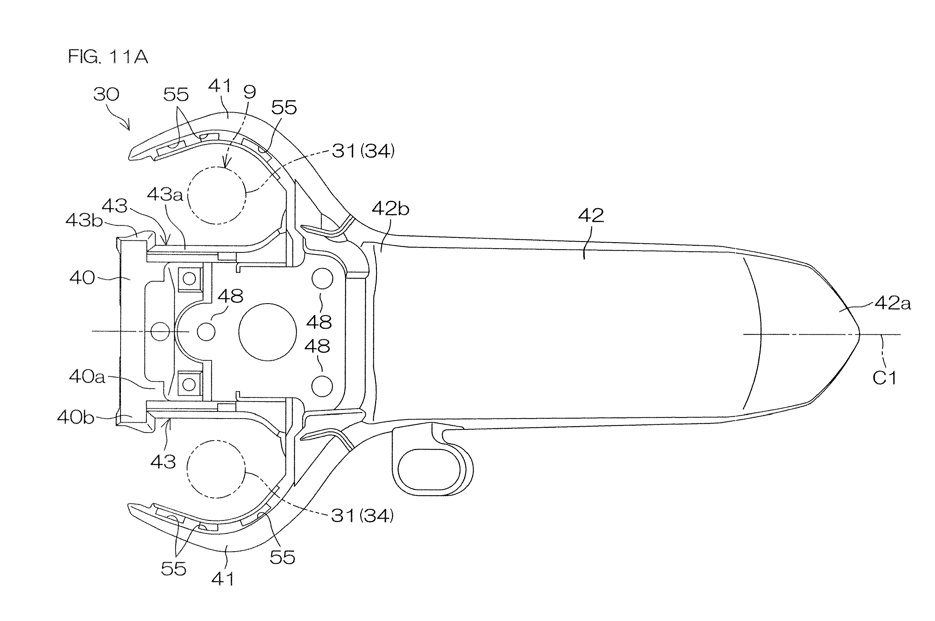

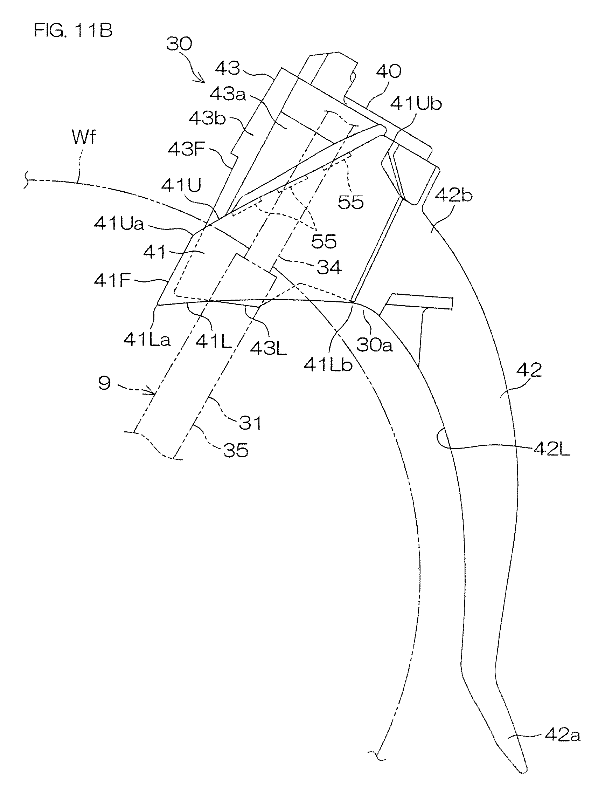

FIG. 11A is a plan view of the second fender 30. FIG. 11B is a left side view of the second fender 30.

As shown in FIG. 11A, the second fender 30 includes a second upper wall portion 40 disposed at inner lateral sides of the front fork 9 and the pair of lower side guard portions 41 disposed at outer lateral sides of the front fork 9. The second fender 30 further includes the second fender portion 42 extending obliquely downward toward the rear from the second upper wall portion 40 and the lower side guard portions 41, and the pair of inner guard portions 43 disposed at inner lateral sides of the lower side guard portions 41.

As shown in FIG. 6, the second upper wall portion 40 is disposed below the under bracket 32. Further, the second upper wall portion 40 is disposed between the two telescopic shafts 31 in the right/left direction. The second upper wall portion 40 is thus disposed between the front fork 9 and below the front fork 9. The under bracket 32 overlaps with the second upper wall portion 40 in a plan view. A width of the second upper wall portion 40 is narrower than a width of the under bracket 32. Further, the width of the second upper wall portion 40 is wider than a width of the front wheel Wf. The second upper wall portion 40 is disposed above the front wheel Wf. A front end portion of the second upper wall portion 40 is disposed further to the front than the telescopic shafts 31 and a rear end portion of the second upper wall portion 40 is disposed further to the rear than the telescopic shafts 31. The second upper wall portion 40 overlaps with the vehicle center C1.

As shown in FIG. 11A, the second upper wall portion 40 has a narrow portion 40a that is narrower in width than the front fork 9 and a wide portion 40b that is wider in width than the narrow portion 40a. The narrow portion 40a is disposed between the two telescopic shafts 31. The narrow portion 40a extends further to the front than the two telescopic shafts 31. The wide portion 40b is joined to a front end portion of the narrow portion 40a. The wide portion 40b is thus disposed further to the front than the two telescopic shafts 31. A right end portion and a left end portion of the wide portion 40b projects further outward than the narrow portion 40a. The width of the wide portion 40b is narrower than an interval between inner lateral surfaces of the two telescopic shafts 31 in the right/left direction (width of a space between the two inner tubes 34). Similarly, the width of the narrow portion 40a is narrower than the interval between the two telescopic shafts 31 in the right/left direction. The narrow portion 40a and the wide portion 40b can thus pass between the two telescopic shafts 31 in the front/rear direction and the second fender 30 can be removed to the rear with respect to the front fork 9.

As shown in FIG. 11A, the pair of lower side guard portions 41 are disposed at the right and left of the vehicle center C1. The second upper wall portion 40 is disposed between the pair of lower side guard portions 41 in the right/left direction in a plan view. The pair of lower side guard portions 41 are disposed at the right and left of the two telescopic shafts 31. Each lower side guard portion 41 is thus disposed at the right or left of the front fork 9. Each lower side guard portion 41 has an arcuate shape that bulges outward in a plan view. The lower side guard portion 41 extends from behind the corresponding telescopic shaft 31, past the outer lateral side of the telescopic shaft 31, and to further in front than the telescopic shaft 31. The lower side guard portion 41 thus extends from behind the front fork 9, past the outer lateral side of the front fork 9, and to further in front than the front fork 9.

As shown in FIG. 11B, an upper end edge 41 U of the lower side guard portion 41 extends obliquely upward toward the rear from the front of the telescopic shaft 31 in a side view. The upper end edge 41U of the lower side guard portion 41 is thus inclined in the up/down direction with respect to the telescopic shaft 31. The upper end edge 41 U of the lower side guard portion 41 is thus inclined in the up/down direction with respect to the front fork 9. Similarly, a lower end edge 41 L of the lower side guard portion 41 extends obliquely upward toward the rear from the front of the telescopic shaft 31 in a side view. The lower end edge 41 L of the lower side guard portion 41 is thus inclined in the up/down direction with respect to the telescopic shaft 31. The lower end edge 41 L of the lower side guard portion 41 is thus inclined in the up/down direction with respect to the front fork 9.

As shown in FIG. 11B, the upper end edge 41 U of the lower side guard portion 41 and the lower end edge 41 L of lower side guard portion 41 span across the telescopic shaft 3 in the front/rear direction in a side view. A front end 41 Ua of the upper end edge 41 U of the lower side guard portion 41 is a lower end of the upper end edge 41 U and overlaps with the front wheel Wf in a side view. A rear end 41 Ub of the upper end edge 41 U of the lower side guard portion 41 is an upper end of the upper end edge 41 U and is disposed above the front wheel Wf in a side view. Similarly, a front end 41 La of the lower end edge 41 L of the lower side guard portion 41 is a lower end of the lower end edge 41 L and overlaps with the front wheel Wf in a side view. A rear end 41 Lb of the lower end edge 41 L of the lower side guard portion 41 is an upper end of the lower end edge 41 L and is disposed above the front wheel Wf in a side view.

As shown in FIG. 11A, the second fender portion 42 is disposed further to the rear than the second upper wall portion 40 and the lower side guard portions 41. The second fender portion 42 overlaps with the vehicle center C1. The second fender portion 42 is longer in the front/rear direction than the second upper wall portion 40 and the lower side guard portions 41. A width of a tip portion 42a of the second fender portion 42 which is a rear end portion is narrower than a width of a base portion 42b of the second fender portion 42 which is a front end portion. Further, the width of the base portion 42b of the second fender portion 42 is narrower than a width of the lower side guard portions 41. The width of the second fender portion 42 is thus narrower than the width of the lower side guard portions 41.

As shown in FIG. 11B, the tip portion 42a of the second fender portion 42 is disposed lower than the second upper wall portion 40 and the lower side guard portions 41. Further, the tip portion 42a of the second fender portion 42 is disposed lower than the base portion 42b of the second fender portion 42. The base portion 42b of the second fender portion 42 is disposed behind the lower side guard portions 41 in a side view. The base portion 42b of the second fender portion 42 is disposed higher than the front ends 41 La of the lower end edges 41L of the lower side guard portions 41. A lower end edge 42L of the second fender portion 42 and the lower end edge 41 L of each lower side guard portion 41 form an arcuate recessed portion 30a that is recessed higher than the front end 41 La of the lower end edge 41 L of the lower side guard portion 41 in a side view at a portion of joining of the second fender portion 42 and the lower side guard portion 41.

As shown in FIG. 1, the second fender portion 42 is disposed behind the front wheel Wf. The engine 4 is disposed behind the second fender portion 42. A lower end of the second fender portion 42 is disposed lower than the engine 4 and the front fork 9. Further, the lower end of the second fender portion 42 is disposed lower than the leg shield 22. The tip portion 42a of the second fender portion 42 is the rear end portion, and extends obliquely downward toward the rear so as to separate away from the front wheel Wf as the lower end of the second fender portion 42 is approached. An interval between the tip portion 42a of the second fender portion 42 and the front wheel Wf in the front/rear direction thus widens as the lower end of the second fender portion 42 is approached. Scattering matter kicked up by the front wheel Wf during forward drive of the motorcycle 1 is thus received reliably by the second fender 30.

As shown in FIG. 11A, the pair of inner guard portions 43 are disposed at the right and left of the vehicle center C1. The inner guard portions 43 are disposed between the pair of the lower side guard portions 41 in the right/left direction in a plan view. The telescopic shaft 31 at the right is disposed between the lower side guard portion 41 at the right and the inner guard portion 43 at the right, and the telescopic shaft 31 at the left is disposed between the lower side guard portion 41 at the left and the inner guard portion 43 at the left. The inner guard portions 43 are thus disposed between the two telescopic shafts 31. The inner guard portions 43 are thus disposed between the front fork 9.

As shown in FIG. 8 and FIG. 9, each inner guard portion 43 extends forward from an inner surface of the second fender 30. A rear end portion of the inner guard portion 43 is disposed further to the rear than the front fork 9. A front end portion of the inner guard is disposed further to the front than the front guard portion 39. The two telescopic shafts 31 are respectively disposed at the right and left of the pair of inner guard portions 43. Similarly, the pair of front guard portions 39 are respectively disposed at the right and left of the pair of inner guard portions 43. The inner guard portions 43 thus extend further to the front than the front fork 9 upon passing between the front fork 9 and extend further to the front than the pair of front guard portions 39 upon passing between the front guard portions 39.

As shown in FIG. 8 and FIG. 9, each inner guard portion 43 includes a narrow portion 43a disposed further inward than the inner end portion 39a of the front guard portion 39 and a wide portion 43b extending outward from the narrow portion 43a. The narrow portion 43a extends from further to the rear than the inner end portion 39a of the front guard portion 39 to further to the front than the inner end portion 39a of the front guard portion 39. The wide portion 43b extends outward from the narrow portion 43a at a position further to the front than the inner end portion 39a of the front guard portion 39. The wide portion 43b is positioned in front of the inner end portion 39a of the front guard portion 39. The inner guard portion 43 thus extends past an inner lateral side of the front guard portion 39 and to the front of the front guard portion 39. The inner end portion 39a of the front guard portion 39 is thus covered from the front by the inner guard portion 43.

As shown in FIG. 4, the pair of inner guard portions 43 extend downward from a right end portion and a left end portion of the second upper wall portion 40. The narrow portion 43a of each inner guard portion 43 extends downward from the narrow portion 40a of the second upper wall portion 40 and the wide portion 43b of the inner guard portion 43 extends downward from the wide portion 40b of the second upper wall portion 40. The second upper wall portion 40 and the pair of inner guard portions 43 form a groove that has a downwardly open U-like shape in a front view. A portion of the front wheel Wf is disposed inside this groove. The inner guard portions 43 extend lower than the upper end portions of the outer tubes 35. The exposed portions of the inner tubes 34 are thus covered from the inner lateral sides by the inner guard portions 43. The front fork 9 is thereby protected more reliably.

As shown in FIG. 11B, a front end edge 43F of each inner guard portion 43 intersects the upper end edge 41 U of the lower side guard portion 41 in a side view. A front end edge 41F of each lower side guard portion 41 is disposed in front of the inner guard portion 43 in a side view. A portion of the inner guard portion 43 projects downward from the lower side guard portion 41 in a side view. A lower end edge 43L of the inner guard portion 43 thus intersects the lower end edge 41 L of the lower side guard portion 41 in a side view. The front end 41 La of the lower end edge 41 L of the lower side guard portion 41 is disposed below the inner guard portion 43. Further, the front end 41 La of the lower end edge 41 L of the lower side guard portion 41 is disposed further in front than the lower end edge 43L of the inner guard portion 43.

As shown in FIG. 5 and FIG. 6, the motorcycle 1 includes a mounting structure for detachably mounting the first fender 29 and the second fender 30 on the front fork 9 by bolts B1 and bolts B2.

Specifically, as shown in FIG. 5 and FIG. 6, the second fender 30 includes a plurality of first mounting portions 48 provided on the second upper wall portion 40. The front fork 9 includes a plurality of first pedestal portions 49 provided on the under bracket 32. FIG. 5 and FIG. 6 show an example in which three each of the first mounting portions 48 and first pedestal portions 49 are provided.

As shown in FIG. 5 and FIG. 6, one first pedestal portion 49 is disposed in front of the intermediate coupling portion 321 of the under bracket 32 in a plan view and the other two first pedestal portions 49 are disposed behind the intermediate coupling portion 321 in a plan view. The first pedestal portion 49 at the front overlaps with the vehicle center C1. The two first pedestal portions 49 at the rear are disposed at the right and left of the vehicle center C1. The three first pedestal portions 49 are respectively disposed above the three first mounting portions 48. The bolts B1 are mounted from below onto the first pedestal portions 49 and the first mounting portions 48 that overlap mutually in the up/down direction. A tip portion of a threaded shaft of each bolt B1 projects upward from a penetrating hole penetrating through the first mounting portion 48 in the up/down direction and is mounted in a threaded hole provided in the first pedestal portion 49. The first mounting portion 48 is thereby fastened onto the first pedestal portion 49.

Also as shown in FIG. 10C, the first fender 29 includes a plurality of second mounting portions 50 provided on the upper side guard portions 37. As shown in FIG. 6, the front fork 9 includes a plurality of second pedestal portions 51 provided on the under bracket 32. FIG. 6 and FIG. 10C show an example where two each of the second mounting portions 50 and second pedestal portions 51 are provided.

As shown in FIG. 5, the two second mounting portions 50 are respectively disposed at the right and left of the vehicle center C1. The two second mounting portions 50 are disposed behind the under bracket 32. The two second mounting portions 50 are respectively disposed behind the two second pedestal portions 51. The bolts B2 are mounted from behind onto the second mounting portions 50 and the second pedestal portions 51 that overlap mutually in the front/rear direction. A tip portion of a threaded shaft of each bolt B2 projects forward from a penetrating hole penetrating through the second mounting portion 50 in the front/rear direction and is mounted in a threaded hole provided in the second pedestal portion 51. The second mounting portion 50 is thereby fastened onto the second pedestal portion 51.

Also as shown in FIG. 5, the first fender 29 includes a plurality of third mounting portions 52 provided on the first upper wall portion 36. The second fender 30 includes a plurality of third pedestal portions 53 provided on the second upper wall portion 40. FIG. 5 shows an example where two each of the third mounting portions 52 and third pedestal portions 53 are provided.

As shown in FIG. 5, the two third mounting portions 52 are respectively disposed at the right and left of the vehicle center C1. The two third mounting portions 52 are respectively disposed above the two third pedestal portions 53. The bolts B1 are mounted from above onto the third mounting portions 52 and the third pedestal portions 53 that overlap mutually in the up/down direction. The threaded shaft of each bolt B1 is inserted into a penetrating hole penetrating through the third mounting portion 52 in the up/down direction and a penetrating hole penetrating through the third pedestal portion 53 in the up/down direction and the tip portion of the threaded shaft projects downward from the second fender 30. A nut (not shown) is mounted on the tip portion of the threaded shaft below the first fender 29 and the second fender 30. The third mounting portion 52 is thereby fastened onto the third pedestal portion 53.

The coupling structure that includes the plurality of mounting portions and the plurality of pedestal portions thus detachably mounts the second fender 30 on the under bracket 32 and detachably mounts the first fender 29 on the second fender 30 and the under bracket 32. The first fender 29 extends obliquely downward toward the front from the front fork 9, and the second fender 30 extends obliquely downward toward the rear from the front fork 9. The first fender 29 and the second fender 30 are thus cantilevered by the under bracket 32 of the front fork 9.

As shown in FIG. 7, the first fender 29 and the second fender 30 are mounted on the front fork 9 in a state where the upper side guard portions 37 and the lower side guard portions 41 are connected. The front fender 24 includes an insertion type connection structure that connects the upper side guard portions 37 and the lower side guard portions 41 to each other. Specifically, as shown in FIG. 10B and FIG. 11A, the front fender 24 includes no less than one inserted portion 54, which is provided on either of the upper side guard portions 37 or the lower side guard portions 41, and no less than one insertion hole 55, which is provided in the other of either the upper side guard portions 37 or the lower side guard portions 41. FIG. 10B and FIG. 11A show an example where three inserted portions 54 are provided in each upper side guard portion 37 and three insertion holes 55 are provided in each lower side guard portion 41.

As shown in FIG. 10B, each inserted portion 54 extends downward from the lower end edge 37L of the upper side guard portion 37 in a side view. The three inserted portions 54 are spaced apart at intervals in the front/rear direction. Similarly, as shown in FIG. 11A, the three insertion holes 55 are spaced apart at intervals in the front/rear direction. Each insertion hole 55 opens at an upper end surface of the lower side guard portion 41 that supports the lower end edge 37L of the upper side guard portion 37. As shown in FIG. 8, the three inserted portions 54 are respectively inserted in the three insertion holes 55. In a state where the inserted portions 54 are inserted in the insertion holes 55, an inner surface of each inserted hole 55 is positioned at the front, rear, right, and left of the inserted portion 54. Movements of each inserted portion 54 in the front/rear direction and the right/left direction are thus restricted by the inner surface of the insertion hole 55. Relative movements of the lower end edge 37L of the upper side guard portion 37 and the upper end edge 41 U of the lower side guard portion 41 are thereby suppressed.

As shown in FIG. 7, the upper side guard portions 37 and the lower side guard portions 41 are mutually connected so that the upper side guard portions 37 are positioned above the lower side guard portions 41. The front end edge 37F of each upper side guard portion 37 and the front end edge 41 F of the corresponding lower side guard portion 41 are disposed along the same straight line in a side view. Further, the lower end edge 37L of each upper side guard portion 37 and the upper end edge 41 U of the corresponding lower side guard portion 41 overlap in the up/down direction. The lower end edge 37L of the upper side guard portion 37 and the upper end edge 41 U of the lower side guard portion 41 are thus partitioned by a boundary line X1 into the upper side guard portion 37L side and the lower side guard portion 41 side.

As shown in FIG. 7, the boundary line X1 is a line that partitions a portion at which the lower end edge 37L of the upper side guard portion 37 and the upper end edge 41 U of the lower side guard portion 41 face each other into the upper side guard portion 37 side and the lower side guard portion 41 side in a side view. The boundary line X1 is a line formed by the portion at which the lower end edge 37L of the upper side guard portion 37 and the upper end edge 41U of the lower side guard portion 41 face each other. Therefore, a portion of the lower end edge 37L of the upper side guard portion 37 that is not a portion that faces the upper end edge 41 U of the lower side guard portion 41 is not included in the boundary line X1. Similarly, a portion of the upper end edge 41U of the lower side guard portion 41 that is not a portion that faces the lower end edge 37L of the upper side guard portion 37 is not included in the boundary line X1.

As shown in FIG. 7, the boundary line X1 extends from the front of the front fork 9 to behind the front fork 9 in a side view. The boundary line X1 thus spans across the front fork 9 in the front/rear direction in a side view. A front end X1a of the boundary line X1 is positioned at an outer lateral side of the front wheel Wf and overlaps with the front wheel Wf in a side view. A rear end X1b of the boundary line X1 is disposed higher than the front wheel Wf. The front end X1a of the boundary line X1 is thus disposed lower than the rear end X1b of the boundary line X1. The front end 37La of the lower end edge 37L of the upper side guard portion 37 and the front end 41 Ua of the upper end edge 41 U of the lower side guard portion 41 are thus matched with the front end X1a of the boundary line X1. The front end X1a of the boundary line X1 is disposed lower than the base portion 38b of the first fender portion 38.

As shown in FIG. 7, the boundary line X1 includes a rectilinear inclined portion X2 that is inclined in the up/down direction with respect to the horizontal plane. The inclined portion X2 is inclined in the up/down direction with respect to the horizontal plane so that a front end of the inclined portion X2 is positioned lower than a rear end of the inclined portion X2. Further, the inclined portion X2 is inclined with respect to the front fork 9 in a side view. The inclined portion X2 extends from the front of the front fork 9 to behind the front fork 9 in a side view. The inclined portion X2 thus spans across the front fork 9 in the front/rear direction in a side view. The front end of the inclined portion X2 is matched with the front end X1 a of the boundary line X1. The inclined portion X2 thus extends obliquely upward toward the rear from the front end edge 37F of the upper side guard portion 37 and the front end edge 41 F of the lower side guard portion 41.

As described above, with the present preferred embodiment, the upper side guard portion 37 of the first fender 29 and the lower side guard portion 41 of the second fender 30 are mutually connected so that the upper side guard portion 37 is positioned above the lower side guard portion 41. The boundary line X1 between the lower end edge 37L of the upper side guard portion 37 and the upper end edge 41 U of the lower side guard portion 41 in a side view includes the inclined portion X2 that is inclined with respect to the front fork 9. At least a portion of the lower end edge 37L of the upper side guard portion 37 contacts the upper end edge 41 U of the lower side guard portion 41 at the front of and above the lower side guard portion 41. In other words, at least a portion of the upper end edge 41 U of the lower side guard portion 41 contacts the lower end edge 37L of the upper side guard portion 37 at the rear of and below the upper side guard portion 37.

In a case where a portion of the upper side guard portion 37 contacts the lower side guard portion 41 at the front of the lower side guard portion 41, even when a force that moves the lower side guard portion 41 forward is applied to the second fender 30, the forward movement of the lower side guard portion 41 is restricted by the portion of the upper side guard portion 37. Similarly, in a case where a portion of the upper side guard portion 37 contacts the lower side guard portion 41 above the lower side guard portion 41, even when a force that moves the lower side guard portion 41 upward is applied to the second fender 30, the upward movement of the lower side guard portion 41 is restricted by the portion of the upper side guard portion 37.

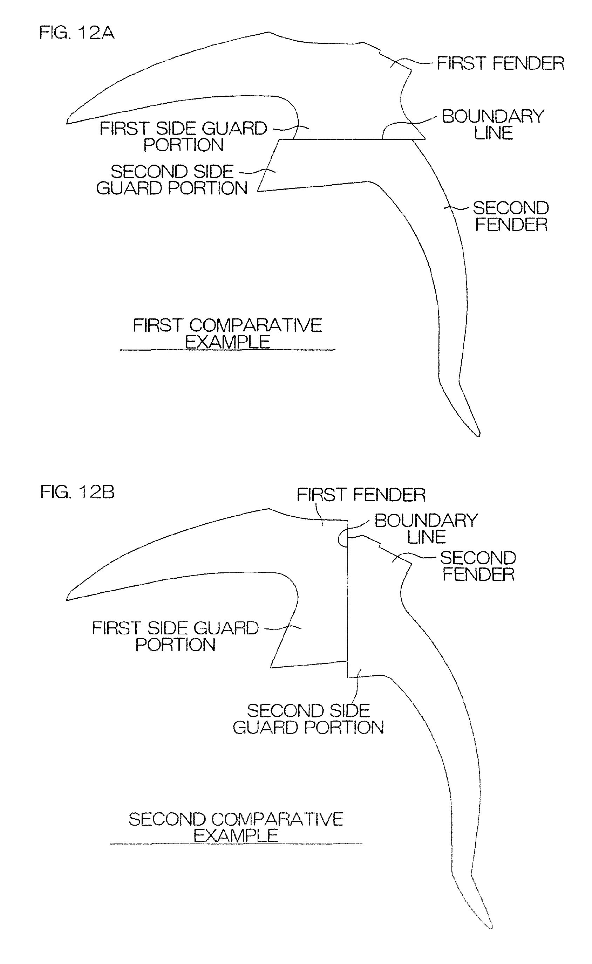

On the other hand, in a case where a boundary line extends horizontally in the front/rear direction as in a first comparative embodiment shown in FIG. 12A, a first side guard portion (upper side guard portion) contacts a second side guard portion (lower side guard portion) above the second side guard portion. Therefore, relative movements of the first side guard portion and the second side guard portion in the front/rear direction are not restricted readily by a connection portion of the first side guard portion and the second side guard portion. Also, even if the boundary line is inclined in the up/down direction with respect to the horizontal plane, if an inclination angle thereof is small, relative movements of the first side guard portion and the second side guard portion are not restricted sufficiently. That is, the closer the boundary line is to the horizontal plane, the more readily the first side guard portion and the second side guard portion vibrate in the front/rear direction.

Similarly, in a case where a boundary line extends vertically in the up/down direction as in a second comparative embodiment shown in FIG. 12B, a first side guard portion (front side guard portion) contacts a second side guard portion (rear side guard portion) at the front of the second side guard portion. Therefore, relative movements of the first side guard portion and the second side guard portion in the up/down direction are not restricted readily by a connection portion of the first side guard portion and the second side guard portion. Also, even if the boundary line is inclined in the front/rear direction with respect to the vertical plane, if an inclination angle thereof is small, relative movements of the first side guard portion and the second side guard portion are not restricted sufficiently. That is, the closer the boundary line is to the vertical plane, the more readily the first side guard portion and the second side guard portion vibrate in the up/down direction.

As mentioned above, the inclined portion X2 of the boundary line X1 is inclined with respect to the front fork 9 in a side view. The inclined portion X2 is thus inclined sufficiently with respect to the horizontal plane and the vertical plane. Relative movements of the upper side guard portion 37 and the lower side guard portion 41 in the front/rear direction and the up/down direction are thus restricted reliably by the connection portion of the upper side guard portion 37 and the lower side guard portion 41. Vibrations of the first fender 29 and the second fender 30 in the front/rear direction and the up/down direction can thereby be reduced.

Further, the front fender 24 extends from the front of the front fork 9, past the outer lateral sides of the front fork 9, and to behind the front fork 9. The boundary line X1 is thereby made long and a contact area of the first fender 29 and the second fender 30 is increased. The first fender 29 and the second fender 30 are thus connected more firmly. Further, the boundary line X1 is inclined with respect to the front fork 9 in a side view and the contact area of the first fender 29 and the second fender 30 is thus increased further. Durability of the front fender 24 against vibrations is thereby improved and vibrations of the first fender 29 and the second fender 30 are reduced.

Also as shown in FIG. 13, with the conventional front fender, the front side fender 110 extends from an outer lateral side of the front fork 121 to behind the front fork 121. The front side fender 110 is thus connected to the rear side fender 160 at a position further to the rear than the front fork 121. Therefore, when a front end portion (portion corresponding to the front guard portion 39 in the present preferred embodiment) of the rear side fender 160 that is positioned in front of the front of the front fork 121 is provided at the front side fender 110, the shape of the front side fender 110 becomes a complicated shape that surrounds the front fork 121. That is, the shape of the front side fender 110 becomes a complicated shape that is difficult to form by pressing.

On the other hand, as shown in FIG. 8, the first fender 29 according to the present preferred embodiment extends outward from the front of the front fork 9 to the outer lateral sides of the front fork 9. The boundary line X1 spans across the front fork 9 in a side view (see FIG. 7) and the first fender 29 is thus connected to the second fender 30 at the outer lateral sides of the front fork 9. Therefore, even when the first fender 29 is provided with the front guard portion 39, the first fender 29 can be suppressed from becoming complicated. The front guard portion 39 that is provided at the second fender 30 in the conventional front fender can thereby be provided at the first fender 29. Ease of assembly and maintainability of the motorcycle 1 can thus be improved.

Also with the present preferred embodiment, the first fender portion 38 extends forward from the upper side guard portion 37 and thus swings readily in the up/down direction with its base portion as a center. The front end X1a of the boundary line X1 is disposed lower than the base portion 38b of the first fender portion 38. Therefore, an up/down direction force applied to the base portion 38b of the first fender portion 38 is not readily applied to the boundary line X1. Separation in the up/down direction (so-called splaying) of the lower end edge 37L of the upper side guard portion 37 and the upper end edge 41 U of the lower side guard portion 41 can thus be suppressed.

Also with the present preferred embodiment, the rear end X1b of the boundary line X1 is positioned higher than the front end X1a of the boundary line X1, and the inclined portion X2 that extends obliquely upward toward the rear can thus be formed readily. Further, the rear end portion of the upper side guard portion 37 can be made shorter in the up/down direction than in a case where the rear end X1b of the boundary line X1 is positioned at the same height as the front end X1a of the boundary line X1 or is positioned lower than the front end X1a of the boundary line X1. Enlargement of the first fender 29 can thereby be suppressed.

Also with the present preferred embodiment, the front fender 24 is mounted on the front fork 9 by the bolts B1 and thus swings readily with a vicinity of the bolts B1 as a center. The inclined portion X2 of the boundary line X1 is inclined with respect to the center lines of the bolts B1 (lines parallel to the telescopic shafts 31) and is inclined with respect to a swinging direction of the front fender 24. The inclined portion X2 can thus suppress the lower end edge 37L of the upper side guard portion 37 and the upper end edge 41 U of the lower side guard portion 41 from separating mutually even when the front fender 24 swings with the vicinity of the bolts B1 as the center. Vibrations of the front fender 24 can thereby be reduced.

Also with the present preferred embodiment, the inner guard portions 43 are disposed at the inner lateral sides of the front fork 9 and the front fender 24 can thus protect the front fork 9 not only from the outer lateral sides and the front of the front fork 9 but also from the inner lateral sides of the front fork 9. The front fork 9 can thereby be protected reliably.

Also with the present preferred embodiment, each inner guard portion 43 extends past the inner lateral side of the corresponding front guard portion 39 and to the front of the front guard portion 39 and therefore at least a portion of the inner guard portion 43 is disposed in front of the front guard portion 39. The inner end portion 39a of the front guard portion 39 is thus covered from the front by the inner guard portion 43. Scattering matter, such as water, mud, or stone, etc., is thus unlikely to pass between the inner end portion 39a of the front guard portion 39 and the inner guard portion 43 and move to surroundings of the front fork 9. The front fork 9 can thus be protected more reliably.

Also with the present preferred embodiment, each front guard portion 39 extends inward from the inner surface of the first fender 29 and therefore there is no gap between the outer end portion 39b of the front guard portion 39 and the inner surface of the first fender 29. Scattering matter, such as water, mud, or stone, etc., can thereby be prevented from passing between the outer end portion 39b of the front guard portion 39 and the inner surface of the first fender 29 and moving to the surroundings of the front fork 9. The front fork 9 can thereby be protected more reliably.

Also with the present preferred embodiment, the upper end portion of the outer tube 35 is covered reliably by the front guard portions 39 and therefore scattering matter, such as water, mud, or stone, etc., can be suppressed from hitting the outer tube 35 and the inner tube 34 at a vicinity of the upper end portion of the outer tube 35. The front fork 9 can thereby be protected more reliably.

Also with the present preferred embodiment, the inserted portions 54 and the insertion holes 55 are provided at the upper side guard portions 37 and the lower side guard portions 41, the inserted portions 54 are inserted into the insertion holes 55, and movements of the inserted portions 54 are thus restricted by the inner surfaces of the insertion holes 55. Relative movements of the lower end edges 37L of the upper side guard portions 37 and the upper end edges 41U of the lower side guard portions 41 are thereby restricted by the inserted portions 54 and the insertion holes 55. Vibrations of the first fender 29 and the second fender 30 can thus be reduced further.

Also with the present preferred embodiment, the lower end edges 37L of the upper side guard portions 37 and the upper end edges 41U of the lower side guard portion 41 can be connected by a simple process of inserting the inserted portions 54 into the insertion holes 55, and assembly and disassembly of the first fender 29 and the second fender 30 are thus easy. Ease of assembly and maintainability of the first fender 29 and the second fender 30 can thus be improved. Ease of assembly and maintainability of the front fender 24 can thereby be improved.

Although the description of the preferred embodiment has been given above, the present teaching is not restricted to the above contents of the preferred embodiment and various modifications are possible within the scope of the claims.

For example, with the preferred embodiment described above, the rear end X1b of the boundary line X1 is disposed higher than the front end X1a of the boundary line X1. However, the rear end X1b of the boundary line X1 may be disposed at the same height as the front end X1a of the boundary line X1 or may be disposed lower than the front end X1a of the boundary line X1.

Also with the preferred embodiment described above, the inclined portion X2 of the boundary line X1 is inclined with respect to the center lines of the bolts B1 in a side view. However, the inclined portion X2 may be parallel to the center lines of the bolts B1.

Also with the preferred embodiment described above, the second fender 30 includes the inner guard portions 43 disposed at the inner lateral sides of the front fork 9. However, the second fender 30 does not have to have the inner guard portions 43.

Also with the preferred embodiment described above, each inner guard portion 43 extends past the inner lateral side of the corresponding front guard portion 39 and to the front of the front guard portion 39. However, the entirety of the inner guard portion 43 may be disposed further to the rear than the front guard portion 39 instead.

Also with the preferred embodiment described above, each front guard portion 39 extends inward from the inner surface of the first fender 29 and the outer end portion 39b of the front guard portion 39 contacts the inner surface of the first fender 29. However, the outer end portion 39b of the front guard portion 39 may be separated from the inner surface of the first fender 29.

Also with the preferred embodiment described above, each front guard portion 39 extends from above the upper end portion of the corresponding outer tube 35 to below the upper end portion of the outer tube 35, and the lower end portion of the front guard portion 39 is disposed lower than the upper end portion of the outer tube 35. However, the lower end portion of the front guard portion 39 may be disposed higher than the upper end portion of the outer tube 35.

Also with the preferred embodiment described above, the front fender 24 is provided with the insertion type connection structure including the inserted portions 54 and the insertion holes 55. However, the connection structure does not have to be provided in the front fender 24.

Also with the preferred embodiment described above, the first fender 29 is a coated part and the second fender 30 is a non-coated part. However, the first fender 29 may be a non-coated part and the second fender 30 may be a coated part instead. Obviously, both the first fender 29 and the second fender 30 may be coated parts or non-coated parts.

## Claims

1. A motorcycle (1) comprising:
a vehicle body frame (2);
a seat (3) supported by the vehicle body frame (2);
a handle (H1) disposed further to a front of the motorcycle than the seat (3);
a vehicle body cover (20) forming, between the seat (3) and the handle (H1) in a front/rear direction of the motorcycle, a recessed portion (26) recessed lower than the seat (3);
an engine (4) supported by the vehicle body frame (2) and at least partially disposed below the recessed portion (26) and the vehicle body frame (2);
a front fork (9) rotatably supported by the vehicle body frame (2) and rotating together with the handle (H1);
a front wheel (Wf) rotatably supported by the front fork (9) and disposed in front of the engine (4); and
a front fender (24) mounted on the front fork (9) so as to be positioned above and
behind the front wheel (Wf), extending outward from the front of the front fork (9) toward an outer lateral side of the front fork (9), and extending inward from the outer lateral side of the front fork (9) toward a rear of the front fork (9);
wherein the front fender (24) includes a first fender (29), at least partially disposed above the front wheel (Wf), and a second fender (30), which is a separate body from the first fender (29) that is connected to the first fender (29) and is at least partially disposed behind the front wheel (Wf),
the first fender (29) includes an upper side guard portion (37) extending outward from the front of the front fork (9) to the outer lateral side of the front fork (9),
**characterized in that**
a front guard portion (39) is positioned further inward than the upper side guard portion (37) and disposed in front of the front fork (9),
the second fender (30) includes a lower side guard portion (41) extending from behind the front fork (9), past the outer lateral side of the front fork (9), and to further to the front of the motorcycle than the front fork (9) and being connected to the upper side guard portion (37) so as to be positioned below the upper side guard portion (37),
a boundary line (X1) between a lower end edge of the upper side guard portion (37) and an upper end edge of the lower side guard portion (41) in a side view of the motorcycle includes an inclined portion (X2) inclined with respect to the front fork (9),
and the inclined portion (X2) extends from the front of the front fork (9) to behind the front fork (9).

2. A motorcycle (1) according to claim 1, **characterized in that** the first fender (29) further includes a first fender portion (38) extending forward of the motorcycle from the upper side guard portion (37) and disposed above the front wheel (Wf), and a front end of the boundary line (X1) is disposed lower than a base portion of the first fender portion (38).

3. A motorcycle (1) according to claim 1 or 2, **characterized in that** a rear end of the boundary line (X1) is disposed higher than a front end of the boundary line (X1).

4. A motorcycle (1) according to any one of claims 1 to 3, **characterized in that** the front fender (24) is mounted on the front fork (9) by a bolt (B1), and the inclined portion (X2) of the boundary line (X1) is inclined with respect to a center line of the bolt (B1) in a side view.

5. A motorcycle (1) according to any one of claims 1 to 4, **characterized in that** the second fender (30) further includes an inner guard portion (43) disposed at an inner lateral side of the front fork (9).

6. A motorcycle (1) according to claim 5, **characterized in that** the inner guard portion (43) extends past an inner lateral side of the front guard portion (39) and to the front of the front guard portion (39).

7. A motorcycle (1) according to any one of claims 1 to 6, **characterized in that** the front guard portion (39) extends inward from an inner surface of the first fender (29).

8. A motorcycle (1) according to any one of claims 1 to 7, **characterized in that** the front fork (9) includes an outer tube (35) and an inner tube (34) extending in an axial direction of the outer tube (35) from an end portion of the outer tube (35), and the front guard portion (39) is disposed in front of the outer tube (35) and the inner tube (34), and extends from above the end portion of the outer tube (35) to below the end portion of the outer tube (35).

9. A motorcycle (1) according to any one of claims 1 to 8, **characterized in that** the front fender (24) includes an inserted portion (54), which is provided at one of either the lower end edge of the upper side guard portion (37) or the upper end edge of the lower side guard portion (41), and an insertion hole (55), which is provided at the other of either the lower end edge of the upper side guard portion (37) or the upper end edge of the lower side guard portion (41) and in which the inserted portion (54) is inserted.

10. A motorcycle (1) according to claim 9, **characterized in that** the inserted portion (54) extends in an up/down direction of the motorcycle and is inserted into the insertion hole (55) in the up/down direction.

11. A motorcycle (1) according to any one of claims 1 to 10, **characterized in that** the first fender (29) is a coated part on which a coating is applied.

12. A motorcycle (1) according to any one of claims 1 to 11, **characterized in that** the second fender (30) is a non-coated part having an exposed surface of base material.

## Patentansprüche

1. Ein Motorrad (1) mit:
einem Fahrzeugrahmen (2);
einem Sitz (3), gelagert durch den Fahrzeugrahmen (2);
einem Griff (H1), positioniert weiter zu einer Vorderseite des Motorrads als der Sitz (3);
einer Fahrzeugverkleidung (20), die zwischen dem Sitz (3) und dem Griff (H1) in der Vorder/Rück-Richtung des Motorrads einen ausgesparten Abschnitt (26), ausgespart niedriger als den Sitz (3) bildet;
einem Motor (4), gelagert durch den Fahrzeugrahmen (2) und zumindest teilweise unter dem ausgesparten Abschnitt (26) und dem Fahrzeugrahmen (2) positioniert;
einer Vordergabel (9), drehbar gelagert durch den Fahrzeugrahmen (2) und drehend zusammen mit dem Griff (H1);
einem Vorderrad (Wf), drehbar gelagert durch die Vordergabel (9) und vor dem Motor (4) positioniert; und
einem Frontkotflügel (24), montiert an der Vordergabel (9), so dass dieser über und hinter dem Vorderrad (Wf) positioniert ist, sich nach außen von der Vorderseite der Vordergabel (9) zu einer äußeren Querseite der Vordergabel (9) erstreckt, und sich nach innen von der äußeren Querseite von der Vordergabe (9) zu einer Rückseite der Vordergabel (9) erstreckt;
wobei der Frontkotflügel (24) einen ersten Kotflügel (29), der zumindest teilweise über dem Vorderrad (Wf) positioniert ist, und einen zweiten Kotflügel (30), der ein separater Körper von dem ersten Kotflügel (29) ist, der mit dem ersten Kotflügel (29) verbunden ist und zumindest teilweise hinter dem Vorderrad (Wf) positioniert ist, beinhaltet,
der erste Kotflügel (29) beinhaltet einen oberen Seiten-Schutzabschnitt (37), der sich nach außen von der Vorderseite der Vordergabel (9) zu einer äußeren Querseite der Vordergabel (9) erstreckt,
**dadurch gekennzeichnet, dass**
ein Vorder-Schutzabschnitt (39) weiter nach innen als der obere Seiten-Schutzabschnitt (37) positioniert ist und vor der Vordergabel (9) positioniert ist,
der zweite Kotflügel (30) einen unteren Seiten-Schutzabschnitt (41) beinhaltet, der sich von hinter der Vordergabel (9) vorbei an der äußeren Querseite der Vordergabel (9) und
weiter zu der Vorderseite des Motorrads als die Vordergabel (9) erstreckt und mit dem oberen Seiten-Schutzabschnitt (37) verbunden ist, so dass dieser unter dem oberen Seiten-Schutzabschnitt (37) positioniert ist,
eine Grenzline (X1) zwischen einer unteren Endkante des oberen Seiten-Schutzabschnitts (37) und einer oberen Endkante des unteren Seiten-Schutzabschnitts (41) in einer Seitenansicht des Motorrads beinhaltet einen geneigten Abschnitt (X2), geneigt mit Bezug auf die Vordergabel (9), und der geneigte Abschnitt (X2) erstreckt sich von der Vorderseite der Vordergabel (9) zu hinter der Vordergabel (9).

2. Ein Motorrad (1) gemäß Anspruch 1, **dadurch gekennzeichnet, dass** der erste Kotflügel (29) weiterhin einen ersten Kotflügel-Abschnitt (38) beinhaltet, der sich nach vorne von dem Motorrad von dem oberen Seiten-Schutzabschnitt (37) erstreckt und über dem Vorderrad (Wf) positioniert ist, und ein vorderes Ende der Grenzlinie (X1) ist niedriger als ein Basisabschnitt von dem ersten Kotflügel-Abschnitt (38) positioniert.

3. Ein Motorrad (1) gemäß Anspruch 1 oder 2, **dadurch gekennzeichnet, dass** ein hinteres Ende der Grenzline (X1) höher als ein vorderes Ende der Grenzlinie (X1) positioniert ist.

4. Ein Motorrad (1) gemäß einem der Ansprüche 1 bis 3, **dadurch gekennzeichnet, dass** der vordere Kotflügel (24) an der Vordergabel (9) durch einen Bolzen (B1) montiert ist, und der geneigte Abschnitt (X2) der Grenzlinie (X1) ist geneigt mit Bezug auf eine Mittelline des Bolzens (B1) in einer Seitenansicht.

5. Ein Motorrad (1) gemäß einem der Ansprüche 1 bis 4, **dadurch gekennzeichnet, dass** der zweite Kotflügel (30) weiterhin einen Innen-Schutzabschnitt (34) beinhaltet, der an einer inneren Querseite der Vordergabel (9) positioniert ist.

6. Ein Motorrad (1) gemäß Anspruch 5, **dadurch gekennzeichnet, dass** der Innen-Schutzabschnitt (43) sich an der inneren Querseite des Vorder-Schutzabschnitts (39) vorbei und zu der Vorderseite des Vorder-Schutzabschnitts (39) erstreckt.

7. Ein Motorrad (1) gemäß einem der Ansprüche 1 bis 6, **dadurch gekennzeichnet, dass** der Vorder-Schutzabschnitt (39) sich nach innen von einer Innenfläche des ersten Kotflügels (29) erstreckt.

8. Ein Motorrad (1) gemäß einem der Ansprüche 1 bis 7, **dadurch gekennzeichnet, dass** die Vordergabel (9) ein Außenrohr (35) und ein Innenrohr (34), das sich in eine axiale Richtung des Außenrohrs (35) von einem Endabschnitt des Außenrohrs (35) erstreckt, beinhaltet, und der Vorder-Schutzabschnitt (39) ist vor dem Außenrohr (35) und dem Innenrohr (34) positioniert, und erstreckt sich von oberhalb des Endabschnitts des Außenrohrs (35) nach unterhalb des Endabschnitts des Außenrohrs (35).

9. Ein Motorrad (1) gemäß einem der Ansprüche 1 bis 8, **dadurch gekennzeichnet, dass** der vordere Kotflügel (24) einen eingesetzten Abschnitt (54), der an einer von entweder der unteren Endkante des oberen Seiten-Schutzabschnitts (37) oder der oberen Endkante des unteren Seiten-Schutzabschnitts (41) vorgesehen ist, und ein Einsetzloch (55) beinhaltet, das an dem anderen von entweder der unteren Endkante des oberen Seiten-Schutzabschnitts (37) oder der oberen Endkante des unteren Seiten-Schutzabschnitts (41) vorgesehen ist und in welches der eingesetzte Abschnitt (54) eingesetzt ist.

10. Ein Motorrad (1) gemäß Anspruch 9, **dadurch gekennzeichnet, dass** der eingesetzte Abschnitt (54) sich in eine oben/unten Richtung des Motorrads erstreckt und in das Einsetzloch (55) in die oben/unten Richtung eingesetzt ist.

11. Ein Motorrad (1) gemäß einem der Ansprüche 1 bis 10, **dadurch gekennzeichnet, dass** der erste Kotflügel (29) ein beschichteter Teil ist, auf dem eine Beschichtung aufgebracht ist.

12. Ein Motorrad (1) gemäß einem der Ansprüche 1 bis 11, **dadurch gekennzeichnet, dass** der zweite Kotflügel (30) ein nicht-beschichteter Teil ist, der eine freiliegende Fläche aus Basismaterial hat.

## Revendications

1. Motocyclette (1) comprenant :
un châssis de carrosserie de véhicule (2) ;
un siège (3) supporté par le châssis de carrosserie de véhicule (2) ;
une poignée (H1) disposée plus en avant de la motocyclette que le siège (3) ;
un capot de carrosserie de véhicule (20) formant entre le siège (3) et la poignée (H1) dans la direction avant/arrière de la motocyclette, une partie en retrait (26) en retrait plus bas que le siège (3) ;
un moteur (4) supporté par le châssis de carrosserie de véhicule (2) et disposé au moins partiellement en dessous de la partie en retrait (26) et du châssis de carrosserie de véhicule (2) ;
une fourche avant (9) supportée en rotation par le châssis de carrosserie de véhicule (2) et tournant avec la poignée (H1) ;
une roue avant (Wf) supportée en rotation par la fourche avant (9) et disposée devant le moteur (4) ; et
un garde-boue avant (24) monté sur la fourche avant (9) de façon à être positionné au-dessus de la roue avant (Wf) et derrière celle-ci, s'étendant vers l'extérieur depuis l'avant de la fourche avant (9) vers le côté latéral extérieur de la fourche avant (9), et s'étendant vers l'intérieur depuis le côté latéral extérieur de la fourche avant (9) vers l'arrière de la fourche avant (9) ;
dans laquelle le garde-boue avant (24) comporte un premier garde-boue (29), disposé au moins partiellement au-dessus de la roue avant (Wf) et un second garde-boue (30) qui est un corps distinct du premier garde-boue (29) qui est relié au premier garde-boue (29) et qui est disposé au moins partiellement derrière la roue avant (Wf),
le premier garde-boue (29) comporte une partie de protection latérale supérieure (37) s'étendant vers l'extérieur depuis l'avant de la fourche avant (9) jusqu'au côté latéral extérieur de la fourche avant (9),
**caractérisée en ce que**
une partie de protection avant (39) est positionnée plus vers l'intérieur que la partie de protection latérale supérieure (37) et est disposée devant la fourche avant (9),
le second garde-boue (30) comporte une partie de protection latérale inférieure (41) s'étendant depuis l'arrière de la fourche avant (9) au-delà du côté latéral extérieur de la fourche avant (9) et allant plus loin vers l'avant de la motocyclette que la fourche avant (9), et étant relié à la partie de protection latérale supérieure (37) de façon à être positionné en dessous de la partie de protection latérale supérieure (37) ;
une ligne de limite (X1) entre le bord d'extrémité inférieure de la partie de protection latérale supérieure (37) et le bord d'extrémité supérieure de la partie de protection latérale inférieure (41), vus de côté de la motocyclette, comporte une partie inclinée (X2) inclinée par rapport à la fourche avant (9), et la partie inclinée (X2) s'étend depuis l'avant de la fourche avant (9) jusque derrière la fourche avant (9).

2. Motocyclette (1) selon la revendication 1, **caractérisée en ce que** le premier garde-boue (29) comporte en outre une première partie de garde-boue (38) s'étendant vers l'avant de la motocyclette depuis la partie de protection latérale supérieure (37) et disposée au-dessus de la roue avant (Wf) et une extrémité avant de la ligne de limite (X1) est disposée plus bas que la partie de base de la première partie de garde-boue (38).

3. Motocyclette (1) selon la revendication 1 ou 2, **caractérisée en ce que** l'extrémité arrière de la ligne de limite (X1) est disposée plus haut que l'extrémité avant de la ligne de limite (X1).

4. Motocyclette (1) selon l'une quelconque des revendications 1 à 3, **caractérisée en ce que** le garde-boue avant (24) est monté sur la fourche avant (9) au moyen d'un boulon (B1) et la partie inclinée (X2) de la ligne de limite (X1) est inclinée par rapport à l'axe central du boulon (B1) vus de côté.

5. Motocyclette (1) selon l'une quelconque des revendications 1 à 4, **caractérisée en ce que** le second garde-boue (30) comporte en outre une partie de protection intérieure (43) disposée du côté latéral intérieur de la fourche avant (9).

6. Motocyclette (1) selon la revendication 5, **caractérisée en ce que** la partie de protection intérieure (43) s'étend au-delà du côté latéral intérieur de la partie de protection avant (39) et vers l'avant de la partie de protection avant (39).

7. Motocyclette (1) selon l'une quelconque des revendications 1 à 6, **caractérisée en ce que** la partie de protection avant (39) s'étend vers l'intérieur depuis la surface intérieure du premier garde-boue (29).

8. Motocyclette (1) selon l'une quelconque des revendications 1 à 7, **caractérisée en ce que** la fourche avant (9) comporte un tube extérieur (35) et un tube intérieur (34) s'étendant dans la direction axiale du tube extérieur (35) depuis la partie d'extrémité du tube extérieur (35), et la partie de protection avant (39) est disposée devant le tube extérieur (35) et le tube intérieur (34), et s'étend du dessus de la partie d'extrémité du tube extérieur (35) jusqu'en dessous de la partie d'extrémité du tube extérieur (35).

9. Motocyclette (1) selon l'une quelconque des revendications 1 à 8, **caractérisée en ce que** le garde-boue avant (24) comporte une partie insérée (54), qui est prévue au niveau de l'un ou l'autre bord parmi le bord d'extrémité inférieure de la partie de protection latérale supérieure (37) et le bord d'extrémité supérieure de la partie de protection latérale inférieure (41), et un trou d'insertion (55) qui est prévu au niveau de l'autre bord parmi le bord d'extrémité inférieure de la partie de protection latérale supérieure (37) et le bord d'extrémité supérieure de la partie de protection latérale inférieure (41) et dans lequel est insérée la partie insérée (54).

10. Motocyclette (1) selon la revendication 9, **caractérisée en ce que** la partie insérée (54) s'étend dans la direction haut/bas de la motocyclette et est insérée dans le trou d'insertion (55) dans la direction haut/bas.

11. Motocyclette (1) selon l'une quelconque des revendications 1 à 10, **caractérisée en ce que** le premier garde-boue (29) est une partie revêtue sur laquelle est appliqué un revêtement.

12. Motocyclette (1) selon l'une quelconque des revendications 1 à 11, **caractérisée en ce que** le second garde-boue (30) est une partie non revêtue comportant une surface exposée de matériau de base.
